# EUROPÄISCHE PATENTSCHRIFT

(11) **EP 3 161 414 B1**
(45) Veröffentlichungstag und Bekanntmachung des Hinweises auf die Patenterteilung: **20.01.2021**
(21) Anmeldenummer: 15719187.5
(22) Anmeldetag: 22.04.2015
(51) Int. Cl.: G01C 15/02, G01V 3/15

(54) **ORTUNGSSYSTEM MIT HANDGEFÜHRTER ORTUNGSEINHEIT**
LOCATING SYSTEM HAVING A HAND-HELD LOCATING UNIT
SYSTÈME DE LOCALISATION COMPRENANT UNE UNITÉ DE LOCALISATION GUIDÉE À LA MAIN

(30) Priorität: 25.06.2014 DE 102014212131
(43) Veröffentlichungstag der Anmeldung: 03.05.2017
(73) Patentinhaber: Robert Bosch GmbH, 70442 Stuttgart (DE)
(72) Erfinder: KRAPF, Reiner, 70794 Filderstadt (DE); SGARZ, Heiko, 71229 Leonberg (DE); BROSI, Jan-Michael, 70771 Leinfelden-Echterdingen (DE); AMANN, Christian, 70199 Stuttgart (DE); DAMMERTZ, Ralph, 70839 Gerlingen (DE)
(86) Internationale Anmeldenummer: PCT/EP2015/058715
(87) Internationale Veröffentlichungsnummer: WO 2015/197221

(56) Entgegenhaltungen:
- EP-A1- 0 506 605
- WO-A2-02/073367
- DE-A1-102006 000 364
- DE-U1-202010 016 564

## Beschreibung

### Stand der Technik

Es ist bereits ein Ortungssystem mit zumindest einem handgeführten Ortungssensor, der dazu vorgesehen ist, Ortungsdaten zu unter einer Untersuchungsoberfläche verborgenen Ortungsobjekten zu erfassen, mit einem Positionssensor, der dazu vorgesehen ist, zu den Ortungsdaten zuordenbare Positionsdaten zu erfassen.

DE 20 2010 016564 U1 ,DE 10 2006 000364 A1, WO 02/073367 A2 und EP 0 506 605 A1 offenbaren jeweils ein Ortungssystem und ein Verfahren nach dem Oberbegriff der unabhängigen Ansprüche.

### Offenbarung der Erfindung

Die Erfindung geht aus von einem Ortungssystem gemäß dem Oberbegriff des Anspruchs 1. Ein erfindungsgemäßes Ortungssystem ist in Anspruch 1 definiert.

Dadurch kann eine Karteninformation bereitgestellt werden, auf der ein Benutzer besonders einfach und intuitiv Ortungsobjekte erkennen kann.

Es kann ein Ortungssystem mit einem hohen Bedienkomfort bereitgestellt werden, das einen geringen Schulungsaufwand erfordert.

Unter einem "Ortungssensor" soll in diesem Zusammenhang insbesondere ein Sensor verstanden werden, der dazu vorgesehen ist, physikalische und/oder chemische Größen, beispielsweise eine elektrische und/oder magnetische Feldänderung oder eine Laufzeitänderung, zu erfassen, die auf ein Vorhandensein eines Ortungsobjekts schließen lassen und in ein elektrisch auswertbares Signal umzuwandeln. Der Ortungssensor kann beispielsweise als ein Induktivsensor, ein AC-Sensor, ein Kapazitivsensor, ausgebildet sein und/oder für eine Erfassung mittels elektromagnetischer Strahlung vorgesehen sein. Er kann als ein 50-Hertz-Sensor, ein Mikrowellensensor, ein Radarsensor, ein Terahertzsensor, ein Ultrahochfrequenzsensor, Röntgensensor, ein Infrarotsensor oder als ein NMR-Sensor ausgebildet sein. Er kann auch als ein Schallsensor, beispielsweise ein Ultraschall- oder Impact-Echo-Sensor oder als eine Neutronensonde ausgebildet sein.

Unter "Ortungsdaten" sollen in diesem Zusammenhang insbesondere Messwerte des Ortungssensors verstanden werden, beispielsweise Amplituden, Phasenlagen und/oder Richtungsinformationen und/oder Signalstärkedaten und/oder Relaxationszeiten.

Unter "handgeführt" soll in diesem Zusammenhang insbesondere verstanden werden, vorgesehen für eine durch den Benutzer ausgeführte freie Bewegung, insbesondere eine freie zwei dimensionale Bewegung, über die Untersuchungsoberfläche, insbesondere unabhängig von einem vorgegebenen Raster oder einer vorgegebenen Spur für einen Verfahrweg. Unter einer "Untersuchungsoberfläche" soll in diesem Zusammenhang insbesondere die Oberfläche eines festen Körpers, insbesondere eines Gebäudeteils, beispielsweise einer Wand, einer Decke oder eines Bodens verstanden werden. Es ist auch denkbar, dass die Untersuchungsoberfläche als ein Teil einer Geländeoberfläche ausgebildet ist.

Unter einem "Positionssensor" soll in diesem Zusammenhang insbesondere ein Sensor verstanden werden, der dazu vorgesehen ist, eine Feldänderung, eine Laufzeitänderung und/oder Phasenlage in ein elektrisch auswertbares Signal umzuwandeln und eine Position des Sensors auf der Untersuchungsoberfläche, relativ zu einer früheren Position oder absolut, bezogen auf zumindest einen festen Bezugspunkt zu erfassen und zu übermittel. Der Positionssensor ist beispielsweise als ein optischer oder mechanischer Wegstreckensensor ausgebildet, welcher in einem Betriebszustand eine Bewegung auf der Untersuchungsoberfläche erfasst, oder als ein Abstandssensor ausgebildet und zu einer Entfernungsmessung zu zumindest einem Bezugspunkt mittels einer elektromagnetischen Strahlung, beispielsweise Licht, insbesondere Laserlicht, Infrarot- oder Radarwellen, vorgesehen. Der Positionssensor kann ferner als ein Ultraschallsensor oder ein barometrischer Sensor ausgebildet sein oder ein anderes zweckmäßiges Messverfahren aufweisen.

Unter einem "Bezugspunkt" soll ein relativ zur Untersuchungsoberfläche fest angeordneter Punkt verstanden werden, beispielsweise ein durch ein Markierungselement des Ortungssystems festgelegter Punkt oder ein Punkt an einem Übergang der Untersuchungsoberfläche zu einer anderen Gebäudeteiloberfläche, beispielsweise an einer von einem Boden und einer Wand gebildeten Kante. Weiter ist es denkbar, dass der Positionssensor zu einer Positionsbestimmung mittels einer externen Referenz, beispielsweise stationären Sendern und/oder Satelliten vorgesehen ist. Alternativ ist ferner denkbar, dass der Positionssensor dazu vorgesehen ist, für einen Ortungsvorgang, Positionsdaten unabhängig von einem Bezugspunkt auf der Untersuchungsfläche, rein relativ zu erfassen.

Unter einer "Auswerteeinheit" soll in diesem Zusammenhang insbesondere eine Einheit verstanden werden, die dazu vorgesehen ist, die Ortungsdaten den Positionsdaten zuzuordnen und die Ortungsdaten in Ausgabewerte umzusetzen, die Darstellungsattribute für eine bildhafte Wiedergabe umfassen, wie beispielsweise eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs und/oder eine Sättigungsstufe oder einen Sättigungswert eines Sättigungsverlaufs und/oder ein Muster und/oder Symbole. Vorzugsweise ist die Auswerteeinheit dazu vorgesehen, Skalen der Darstellungsattribute dynamisch anzupassen, beispielsweise in Abhängigkeit von einem Wertebereich für Ortungsdaten, die in einem vorgebbaren Zeitfenster und/oder innerhalb eines räumlichen Bereichs erfasst wurden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Karteninformation" sollen in diesem Zusammenhang insbesondere Daten verstanden werden, die eine Information über eine Anordnung von Ortungsobjekten zumindest in zwei Dimensionen, entlang derer sich die Untersuchungsoberfläche erstreckt, enthalten, und die der Untersuchungsoberfläche, beispielsweise anhand von gegebenen und/oder festlegbaren Bezugspunkten, zuordenbar sind. Vorzugsweise ist die Karteninformation zu einer zumindest im Wesentlichen maßstäblichen bildhaften Anzeige vorgesehen. Unter einer "bildhaften" Anzeige soll in diesem Zusammenhang insbesondere eine optische, vorzugsweise maßstäbliche und positionsaufgelöste Wiedergabe der Ortungsdaten verstanden werden, die dazu vorgesehen ist, zumindest Umrisse der Ortungsobjekte für den Benutzer erkennbar zu machen. Bevorzugt ist die bildhafte Anzeige zu einer Interpretation durch einen menschlichen Betrachter vorgesehen und unabhängig von einem schwellenwertbasierten Detektionsvorgang. Vorzugsweise umfasst die Karteninformation aktuelle und gespeicherte Ortungsdaten, die für die bildhafte Anzeige aufbereitet worden sind. Grundsätzlich ist es denkbar, dass die Karteninformation synthetische Daten, wie beispielsweise ein Gitternetz, Symbole, Linien, Farbverfremdungen und/oder Schattierungen enthält.

Unter einer "Datenquelle" soll in diesem Zusammenhang insbesondere eine interne oder externe Einheit verstanden werden, die dazu vorgesehen ist, Daten für die zweidimensionale Karteninformation bereitzustellen, und beispielweise als ein Datenspeicher, ein Datenauswerte- und/oder -verarbeitungsmodul, ein Sensor oder eine Schnittstelle ausgebildet ist. Unter einer "Modifikation" soll in diesem Zusammenhang insbesondere eine Ergänzung, Verfeinerung, Anreicherung, beispielsweise durch eine Vorverarbeitung von Daten, eine Fusion mit weiteren Ortungsdaten und/oder mit halbsynthetischen oder synthetischen Daten verstanden werden. Vorzugsweise ist der Ortungssensor als Teil einer handgeführten Ortungseinheit ausgebildet, die auch den Positionssensor umfasst, und die Ortungseinheit weist ein Gehäuse auf, das den Ortungssensor und den Positionssensor hält und schützt.

Ferner wird vorgeschlagen, dass der Ortungssensor entlang der Untersuchungsoberfläche frei verfahrbar ausgebildet ist. Dadurch kann ein besonders flexibel nutzbares Ortungssystem bereitgestellt und ein hoher Bedienkomfort erreicht werden. Unter "frei verfahrbar" soll in diesem Zusammenhang insbesondere verstanden werden, dass der Ortungssensor dazu vorgesehen ist, unabhängig von vorgegebenen Spuren und/oder Leitelementen, insbesondere ohne mechanischen Kontakt und vorzugsweise in einer freien Wischbewegung über die Untersuchungsoberfläche zur Erfassung von Ortungsobjekten bewegt zu werden. Bevorzugt ist das Ortungssystem räderlos ausgebildet und frei von Drehelementen, die dazu vorgesehen sind, den Ortungssensor für eine Bewegung entlang der Untersuchungsoberfläche zu führen und/oder die Bewegung des Ortungssensors entlang der Untersuchungsoberfläche zu erfassen.

In einer vorteilhaften Ausgestaltung ist die Auswerteeinheit dazu vorgesehen, die Karteninformation in Echtzeit zu bestimmen und bereitzustellen. Dadurch kann der Benutzer Ortungsobjekte besonders schnell und sicher erkennen und es kann ein besonders effizientes Ortungssystem bereitgestellt werden. Unter "Echtzeit" soll in diesem Zusammenhang insbesondere verstanden werden, dass eine Verarbeitungsgeschwindigkeit der Auswerteeinheit einer Verfahrgeschwindigkeit durch den Benutzer entspricht, d.h. der Benutzer kann die von ihm mit der Ortungseinheit ausgeführte Bewegung direkt einer Änderung der Karteninformation zuordnen. Die Auswerteeinheit ist dazu vorgesehen, immer jeweils aktuell übermittelte Ortungsdaten und Positionsdaten zu erfassen und zwischen zwei Verarbeitungszyklen empfangene Daten von der Verarbeitung auszuschließen. Vorzugsweise vermittelt das Ordnungssystem dem Benutzer den Eindruck, dass die Anzeige des Ortungssystems die Ortungsdaten zumindest im Wesentlichen verzögerungsfrei wiedergibt.

Ferner wird vorgeschlagen dass die Auswerteeinheit dazu vorgesehen ist, eine dreidimensionale Karteninformation zu bestimmen und bereitzustellen. Dadurch kann eine große Informationsdichte erreicht werden, wodurch der Benutzer besonders gut bei der Interpretation der Karteninformation unterstützt werden kann.

Unter einer "dreidimensionalen Karteninformation", soll in diesem Zusammenhang insbesondere eine um eine Tiefeninformation erweiterte zweidimensionale Karteninformation verstanden werden. Eine erste Dimension und eine zweite Dimension erstrecken sich in einer Ebene der Untersuchungsfläche und/oder in einer zur Untersuchungsfläche tangential angeordnete Ebene an der Position der Ortungseinheit. Unter einer "Tiefeninformation" soll in diesem Zusammenhang insbesondere eine Information verstanden werden, die einen Abstand der Ortungsobjekte von der Untersuchungsoberfläche und/oder eine Erstreckung der Ortungsobjekte senkrecht zur Untersuchungsoberfläche wiedergibt. Vorzugsweise ist die dreidimensionale Karteninformation zu einer Wiedergabe mittels einer 3D-fähigen Anzeige vorgesehen.

In vorteilhafter Weise umfasst die Datenquelle einen Zwischenspeicher zumindest für die Ortungsdaten. Dadurch kann die Auswerteeinheit auch die Ortungsdaten eines einzelnen Ortungssensors zu einer zweidimensionalen Karteninformation aufbereiten, und die zweidimensionale Karteninformation kann iterativ verbessert werden. Unter einem "Zwischenspeicher" soll in diesem Zusammenhang insbesondere ein elektronischer Datenspeicher verstanden werden, der zur Ablage und zum Abruf zumindest von Ortungsdaten vorgesehen ist, insbesondere ist der Zwischenspeicher ist als ein von der Auswerteeinheit beschreibbarer und auslesbarer Speicher ausgebildet. Der Zwischenspeicher ist beispielsweise als ein RAM-Baustein, als integrierter Schaltkreis, ausgebildet. In einer Ausgestaltung kann der Zwischenspeicher in der Auswerteeinheit integriert sein, d.h. beispielsweise zumindest als ein Teil eines Speichers der Auswerteeinheit ausgebildet sein. Grundsätzlich ist es denkbar, dass der Zwischenspeicher für ein anderes zweckmäßiges Speicherverfahren vorgesehen ist. Grundsätzlich ist es denkbar, dass der Zwischenspeicher auch zur Ablage und zum Abruf von Datenkomponente der Ortungsdaten vorgesehen ist und/oder zur Ablage und zum Abruf synthetischer Daten, die die Auswerteeinheit aus den Ortungsdaten ableitet.

Ferner wird vorgeschlagen dass die Auswerteeinheit dazu vorgesehen ist, die Ortungsdaten zu interpolieren und/oder zu extrapolieren. Dadurch kann besonders schnell eine zweidimensionale Karteninformation bereitgestellt werden. Fehlmessungen können ausgeglichen werden und es kann eine hohe Qualität der Karteninformation erreicht werden.

Unter "interpolieren" soll in diesem Zusammenhang insbesondere verstanden werden, dass die Auswerteeinheit aus-gehend von vorliegenden und insbesondere in dem Zwischenspeicher abgelegten Ortungsdaten mittels einer zweckmäßigen Berechnungs- und/oder Gewichtungsvorschrift Zwischenwerte berechnet, die Punkten räumlich zwischen den vorliegenden Ortungsdaten zuordenbar sind. Unter "extrapolieren" soll in diesem Zusammenhang insbesondere verstanden werden, dass die Auswerteeinheit ausgehend von vorliegenden und insbesondere in dem Zwischenspeicher abgelegten Ortungsdaten innerhalb eines räumlichen Bereichs mittels einer zweck-mäßigen Berechnungs- und/oder Gewichtungsvorschrift Werte berechnet, die Punkten räumlich außerhalb des Bereichs zuordenbar sind.

In einer vorteilhaften Ausgestaltung ist die Auswerteeinheit dazu vorgesehen, einen Bereich der Karteninformation bei einer erneuten Ortung von Ortungsobjekten, die dem Bereich der Karteninformation zugeordnet sind, zu aktualisieren. Dadurch kann eine hohe Qualität der zweidimensionalen Karteninformation er-reicht werden. Ein Benutzer kann besonders einfach ein Ortungsergebnis in einem für ihn besonders relevanten Bereich verbessern. Es kann ein besonders effizienter Ortungsvorgang erreicht werden. Unter "aktualisieren" soll in diesem Zusammenhang insbesondere verstanden werden, dass die Auswerteeinheit Ortungsdaten aus dem Zwischenspeicher ausliest und mittels aktueller Ortungsdaten fortschreibt, d.h. einen neuen Wert für die zugeordneten Positionsdaten festlegt mittels einer zweckmäßigen Berechnungs- und/oder Gewichtungsvorschrift aus Daten des Zwischenspeichers und aktuellen Ortungsdaten. Insbesondere kann die Aktualisierung in einer Verfeinerung, d.h. in einer Verbesserung der Auflösung der Ortungs- und/oder Positionsdaten führen. Vorzugsweise aktualisiert die Auswerteeinheit die Karteninformation in Echtzeit. Vorzugsweise weist die Auswerteeinheit ein Datenverbesserungsmodul auf, das beispielsweise zu einem Ausgleich von Werteschwankungen aufgrund einer lokalen Beschaffenheit des Gebäudeteils und/oder zu einer Verbesserung eines Kontrasts vorgesehen ist.

Ferner wird vorgeschlagen, dass die Auswerteeinheit dazu vorgesehen ist, einen Bereich der Karteninformation bei einer erneuten Ortung von Ortungsobjekten, die dem Bereich der Karteninformation zugeordnet sind, zu verfeinern. Somit ist es möglich, die Karte bzw. die Karteninformationen genauer, und "fein aufgelöster" dazustellen, wenn man beispielsweise öfters mit dem Messgerät über einen Bereich streicht.

Dadurch kann der Benutzer gezielt relevante Bereiche auf Ortungsobjekte hin untersuchen. Es kann ein besonders effizientes Ortungssystem bereitgestellt werden. Unter "verfeinern" soll in diesem Zusammenhang insbesondere verstanden werden, weitere Sensordaten für die Karteninformation bereitzustellen, insbesondere Sensordaten unterschiedlichen Typs, und/oder Sensordaten zu fusionieren und/oder synthetische Daten und/oder halbsynthetische Daten für die Karteninformation bereitzustellen. Vorzugsweise erhöht die Auswerteeinheit bei einer erneuten Ortung eine Informationsdichte und/oder eine räumliche Auflösung und löst feinere Details auf.

In vorteilhafter Weise ist eine weitere Datenquelle als ein weiterer Ortungssensor ausgebildet. Dadurch können ergänzende oder redundante Ortungsdaten erfasst wer-den und es kann eine hohe Ortungsqualität erreicht werden. Das Ortungssystem kann in kurzer Zeit eine große Zahl von Ortungsdaten erfassen, wodurch ein besonders effizienter Ortungsprozess erreicht werden kann. Es können unterschiedliche Merkmale der Ortungsobjekte erfasst und zu einer Klassifizierung der Ortungsobjekte verwendet werden. Es kann ein besonders vielseitiges Ortungssystem mit einem hohen Bedienkomfort bereitgestellt werden. Unter einem weiteren "Ortungssensor" soll in diesem Zusammenhang insbesondere ein Sensor verstanden werden, der analog zu dem Ortungssensor dazu vorgesehen ist, physikalische und/oder chemische Größen zu erfassen, beispielsweise eine elektrische und/oder magnetische Feldänderung oder eine Laufzeitänderung, die auf ein Vorhandensein eines Ortungsobjekt schließen lassen und in ein elektrisch auswertbares Signal umzuwandeln. Der weitere Ortungssensor kann beispielsweise als ein Induktivsensor, ein AC-Sensor, ein Kapazitivsensor, ausgebildet sein und/oder für eine Erfassung mittels elektromagnetischer Strahlung vor-gesehen sein. Er kann als ein 50-Hertz-Sensor, ein Mikrowellensensor, ein Radarsensor, ein Terahertzsensor, ein Ultrahochfrequenzsensor, Röntgensensor, ein Infrarotsensor oder als ein NMR-Sensor ausgebildet sein. Er kann auch als ein Schallsensor, beispielsweise ein Ultraschall- oder Impact-Echo-Sensor oder als eine Neutronensonde ausgebildet sein. Grundsätzlich ist es sowohl denkbar, dass die beiden Ortungssensoren nach einem gleichen physikalischen und/oder chemischen Prinzip arbeiten, als auch dass sie dazu vorgesehen sind, unterschiedliche Merkmale der Ortungsobjekte zu erfassen und an die Auswerteeinheit zu einer Anzeige der Merkmale und/oder zu einer Klassifizierung der Ortungsobjekte weiterzuleiten. Bevorzugt sind die Ortungssensoren räumlich fest zueinander angeordnet, beispielsweise in einem Gehäuse der Ortungseinheit gehalten.

In einer vorteilhaften Ausgestaltung ist eine weitere Datenquelle als ein weiterer Positionssensor ausgebildet. Dadurch kann eine Redundanz erzielt werden, wodurch Positionsdaten besonders zuverlässig erfasst werden können. Darüber hinaus kann die Auswerteeinheit mittels der Positionsdaten des weiteren Positionssensors eine Drehung des Ortungssensors erkennen und die Zuordnung von Ortungsdaten zu Positionsdaten entsprechend korrigieren. Es kann ein besonders vielseitig einsetzbares Ortungssystem bereitgestellt werden.

Unter einem weiteren "Positionssensor" soll in diesem Fall ein Sensor verstanden werden, der analog zu dem Positionssensor dazu vorgesehen ist, eine Position des Sensors auf der Untersuchungsoberfläche, relativ zu einer unmittelbar vorangehenden Position oder absolut, bezogen auf zumindest einen festen Bezugspunkt zu erfassen und zu übermitteln. Grundsätzlich ist es denkbar, dass die Positionssensoren analog zu-einander ausgebildet sind. Ebenso ist es denkbar, dass die Positionssensoren dazu vorgesehen sind, die Positionsdaten aufgrund unterschiedlicher Funktions-weisen zu erfassen. Beispielsweise kann der Positionssensor als ein absolut messender Positionssensor ausgebildet sein, und der weitere Positionssensor als ein relativ messender Positionssensor ausgebildet sein. Die Positionssensoren können auch eine unterschiedliche Ortsauflösung aufweisen, d.h. ein grob messender Positionssensor stellt beispielsweise einen Bezugspunkt für einen fein messenden Positionssensor bereit.

In einer vorteilhaften Ausgestaltung ist eine weitere Datenquelle als ein Drehungssensor ausgebildet, der dazu vorgesehen ist, eine Drehung des Ortungssensors zu erfassen. Dadurch kann die Auswerteeinheit eine Zuordnung der Ortungsdaten zu den Positionsdaten für die Karteninformation anhand der Daten des Drehungs-sensors korrigieren, wodurch ein besonders robust einsetzbares Ortungssystem bereitgestellt werden kann. Unter einem "Drehungssensor" soll in diesem Zusammenhang insbesondere ein Sensor verstanden werden, der dazu vorgesehen ist, eine Winkellage des Ortungssensors, insbesondere eine Winkellage bezüglich einer Drehung um eine Achse senkrecht zu der Untersuchungsoberfläche, zu erfassen. Der Drehungssensor kann dazu die Winkellage des Ortungssensors in Bezug zu einem Schwerefeld und/oder zu einem Magnetfeld der Erde erfassen und/oder dazu vorgesehen sein, Signale von erdgebundenen Signalgebern und/oder von Satelliten auszuwerten.

Ferner wird vorgeschlagen, dass eine weitere Datenquelle als ein Beschleunigungssensor ausgebildet ist, der dazu vorgesehen ist, eine Beschleunigungsinformation des Ortungssensors zu erfassen. Dadurch kann eine Qualität der Ortungsdaten in Bezug auf eine Beschleunigung des Ortungssensors zu einem Zeitpunkt ihrer Erfassung bewertet werden. Ferner kann die Auswerteeinheit eine redundante Positionsbestimmung vornehmen und es kann eine hohe Zuverlässigkeit der Positionszuordnung des Ortungssystems erreicht werden.

In einer vorteilhaften Ausgestaltung ist eine weitere Datenquelle als eine externe Anwendung ausgebildet ist. Dadurch kann eine Integration des Ortungssystems in andere Systeme und/oder eine Schnittstelle für eine Übermittlung der Karteninformation bereitgestellt werden. Die Daten des Ortungssystems können besonders einfach weitergeleitet und weiter ausgewertet werden. Die Auswerteeinheit und/oder eine Anzeigeeinheit kann über die externe Anwendung gesteuert und/oder eingestellt werden. Ein Bedienkonzept, beispielsweise eines Smartphones, kann in vorteilhafter Weise genutzt werden. Unter einer "externen Anwendung" soll in diesem Zusammenhang insbesondere eine Anwendungssoftware für eine externe Recheneinheit, beispielsweise eines Computers, insbesondere eines tragbaren Computers oder eines Smartphones verstanden werden, die zumindest eine Schnittstelle mit der Auswerteeinheit und/oder der Anzeigeeinheit zu einer Übertragung der Karteninformation und/oder zu einer Übertragung von Steuerinformationen aufweist. Es ist denkbar, dass die externe Anwendung dazu vorgesehen ist, die Karteninformation auf einer Anzeigeeinheit der externen Recheneinheit darzustellen. Es ist weiterhin denkbar, dass die externe Anwendung Software zu einer weiteren Auswertung der Karteninformation aufweist, beispielsweise eine Bilderkennungssoftware und/oder eine Modellierungssoftware.

Ferner wird vorgeschlagen, dass die Auswerteeinheit dazu vorgesehen ist, zumindest einen Teil der Ortungsdaten bei einer Erzeugung und/oder bei der Modifizierung der Karteninformation zu gewichten. Dadurch kann eine Redundanz durch die Datenquelle in vorteilhafter Weise genutzt werden und eine hohe Qualität der Karteninformation erreicht werden. Unter "gewichten" soll in diesem Zusammenhang insbesondere verstanden werden, dass Daten für die Erzeugung und/oder bei der Modifizierung der Karteninformation mit einem Gewichtungsfaktor multipliziert werden. Vorzugsweise bestimmt die Auswerteeinheit die Gewichtung abhängig von einer Datenqualität, die durch die Auswertung redundanter Daten ermittelt wird.

Der Gewichtungsfaktor kann auch null sein, d.h. Daten bleiben für die Karteninformation unberücksichtigt, beispielsweise Daten, die als ein Messfehler eingestuft werden.

In vorteilhafter Weise ist eine weitere Datenquelle als eine Kamera ausgebildet, die in zumindest einem Betriebszustand ein Bild der Untersuchungsoberfläche aufnimmt. Dadurch kann für den Benutzer eine Orientierungsinformation zur Interpretation der Karteninformation bereitgestellt werden und eine hoher Bedienkomfort des Ortungssystems erreicht werden. Vorzugsweise ist die Auswerteeinheit dazu vorgesehen, das Bild in die Karteninformation zu integrieren, d.h. insbesondere das Bild bezüglich der Positionsdaten zu referenzieren und/oder Verzerrungen auszugleichen.

Die Datenquelle umfasst ein Bilderkennungsmodul, das da-zu vorgesehen ist, anhand der Ortungsdaten des Ortungssensors Strukturdaten bereitzustellen. Dadurch kann für den Benutzer eine Interpretationshilfe bereitgestellt werden und ein hoher Bedienkomfort des Ortungssystems erreicht werden. Ortungsobjekte können sehr zuverlässig erkannt werden. Unter einem "Bilderkennungsmodul" soll in diesem Zusammenhang ein Rechenmodul oder ein Softwaremodul verstanden werden, das dazu vorgesehen ist, Strukturen in Bild-daten zu interpretieren, also beispielsweise Ränder von Ortungsobjekten zu er-kennen und als graphische Elemente wie zum Beispiel Linien auszugeben. Grundsätzlich ist es denkbar, dass das Bilderkennungsmodul in der Auswerteeinheit integriert ist.

In vorteilhafter Weise umfasst eine weitere Datenquelle ein Modellierungsmodul, das dazu vorgesehen ist, anhand der Ortungsdaten des Ortungssensors Modelldaten bereitzustellen. Dadurch kann für den Benutzer eine Interpretationshilfe bereitgestellt werden und ein hoher Bedienkomfort des Ortungssystems erreicht werden. Es kann ein hoher Informationsgehalt über die Ortungsobjekte bereitgestellt werden. Unter einem "Modellierungsmodul" soll in diesem Zusammenhang ein Rechenmodul oder ein Softwaremodul verstanden werden, das dazu vorgesehen ist, Strukturen in Bilddaten zu interpretieren, also beispielsweise Elemente von Ortungsobjekten zu erkennen, und vorzugsweise ein dreidimensionales Modell vorzuschlagen und/oder anzupassen und als graphische Elemente wie zum Bei-spiel ein Drahtgittermodell auszugeben. Es ist denkbar, dass das Modellierungsmodul in der Auswerteinheit integriert ist.

Ferner wird vorgeschlagen, dass das Ortungssystem zumindest eine Anzeigeeinheit umfasst, die dazu vorgesehen ist, zumindest einen Ausschnitt der Karteninformation anzuzeigen. Dadurch kann ein besonders flexibles Ortungssystem bereitgestellt werden. Unter einer "Anzeigeeinheit" soll in diesem Zusammenhang insbesondere eine Einheit verstanden werden, die zu einer Übertragung von Anzeigedaten mit der Auswerteeinheit verbunden ist, mit einem flächigen Anzeigeelement, das zu einer bildhaften Anzeige vorgesehen ist, beispielsweise eine Flüssigkristallanzeige, eine LED-Anzeige, ein Bildschirm, der für eine andere geeignete Anzeigetechnik vorgesehen ist, oder ein Projektor.

Vorzugsweise ist die Anzeigeeinheit zur Darstellung von Graustufen, besonders bevorzugt zur Darstellung von Farben vorgesehen. Es ist auch denkbar, dass die Anzeige 3D-fähig ausgebildet ist, und Mittel umfasst, die dazu vorgesehen sind, bei einem Benutzer einen dreidimensionalen Bildeindruck zu vermitteln. Die Anzeigeeinheit kann mittels Datenkabeln oder drahtlos mit der Auswerteeinheit verbunden sein. Es ist denkbar, dass die Auswerteeinheit in der Anzeigeeinheit integriert ist und die Anzeigeeinheit insbesondere dazu vorgesehen ist, Ortungsdaten in ein Darstellungsattribut zur bildhalten Wiedergabe umzusetzen, wie beispielsweise in eine Grauwertstufe, einen Grauwert eines Grauwerteverlaufs, eine Farbwertstufe, einen Farbwert eines Farbverlaufs, eine Helligkeitsstufe, einen Helligkeitswert eines Helligkeitsverlaufs, eine Sättigungsstufe oder einen Sättigungswert eines Sättigungsverlaufs und/oder ein Muster und/oder ein Symbol. In einer Ausgestaltung kann der Zwischenspeicher in der Anzeigeinheit integriert sein, d.h. beispielsweise zumindest als ein Teil eines Speichers der Anzeigeeinheit ausgebildet sein. Es ist ferner denkbar, dass die Anzeigeeinheit als Teil der Ortungseinheit ausgebildet ist. Es ebenso denkbar, dass die Anzeigeeinheit getrennt von der Ortungseinheit ausgebildet ist, und/oder dass das Ortungssystem eine weitere Anzeigeeinheit umfasst, die getrennt von der Ortungseinheit ausgebildet ist. Die Anzeigeeinheiten können unterschiedlichen Ortungssensoren zugeordnet sein. Es ist weiterhin denkbar, dass das Ortungssystem zumindest eine Schnittstelle zu einer Anzeigeeinheit aufweist, die als Teil einer externen Recheneinheit ausgebildet ist.

In einer vorteilhaften Ausgestaltung ist die Anzeigeeinheit dazu vorgesehen, den angezeigten Ausschnitt der Karteninformation in Abhängigkeit von den Positionsdaten zu bestimmen. Dadurch kann ein besonders flexibel einsetzbares Ortungssystem bereitgestellt werden und Ortungsobjekte können besonders schnell geortet werden. Bevorzugt verschiebt oder vergrößert die Anzeigeeinheit in einem Betriebsmodus den angezeigten Ausschnitt, wenn die aktuell dem Ortungssensor zugeordneten Positionsdaten einen Randbereich des angezeigten Ausschnitts erreichen. Vorzugsweise weist der Randbereich eine Breite von 5 Prozent, bevorzugt 10 Prozent und besonders bevorzugt 15 Prozent einer Gesamterstreckung des angezeigten Ausschnitts auf.

In einer vorteilhaften Ausgestaltung ist die Anzeigeeinheit dazu vorgesehen, die Karteninformation in Abhängigkeit von den Positionsdaten zu skalieren. Dadurch kann ein besonders flexibel einsetzbares Ortungssystem bereitgestellt werden, Ortungsobjekte können besonders schnell geortet werden und eine Ortung kann auf einen besonders relevanten Bereich begrenzt werden. Unter "skalieren" soll in diesem Zusammenhang insbesondere verstanden werden, dass die Anzeigeeinheit einen Abbildungsmaßstab anpasst und insbesondere eine Auflösung vergrößert und/oder verfeinert und kleinere Details sichtbar macht. Unter einem "Abbildungsmaßstab" soll in diesem Zusammenhang ein Verhältnis von Erstreckungen der Karteninformation im Anzeigeelement zu Erstreckungen eines zugeordneten Bereichs der Untersuchungsoberfläche verstanden werden. Es ist denkbar, dass die Anzeigeeinheit den Abbildungsmaßstab in Abhängigkeit aller erfassten Positionsdaten bestimmt, oder dass die Anzeigeeinheit den Abbildungsmaßstab in Abhängigkeit von zuletzt erfassten Positionsdaten bestimmt und den Abbildungsmaßstab vergrößert, wenn der Benutzer die Ortungseinheit in einem beschränken Bereich der Untersuchungsoberfläche bewegt. Unter "zuletzt" soll innerhalb eines festlegbaren, zurückliegenden Zeitintervalls verstanden werden, beispielsweise innerhalb der jeweils letzten 30 Sekunden.

In vorteilhafter Weise ist die Anzeigeeinheit dazu vorgesehen ist, den angezeigten Ausschnitt der Karteninformation in Bezug auf eine Position des Ortungssensors zu zentrieren. Dadurch kann ein besonders intuitiv benutzbares Ortungssystem bereitgestellt werden, das eine Orientierung des Benutzers in vorteilhafter Weise unterstützt. Unter "zentrieren" soll in diesem Zusammenhang insbesondere dynamisch zentrieren, d.h. in einem Ortungsvorgang eine Position des Ortungssensors nachführen verstanden werden.

Ferner wird vorgeschlagen, dass die Anzeigeeinheit dazu vorgesehen ist, den dargestellten Ausschnitt der Karteninformation in Abhängigkeit von einer Verfahrgeschwindigkeit zu skalieren und/oder eine räumliche Auflösung zu verändern. Dadurch kann ein besonders flexibel einsetzbares Ortungssystem bereitgestellt werden, Ortungsobjekte können besonders schnell geortet werden und eine Ortung kann auf einen besonders relevanten Bereich begrenzt werden. Bevorzugt entspricht einer hohen Verfahrgeschwindigkeit ein kleiner Abbildungsmaßstab und die Anzeigeeinheit zeigt einen großen Bereich der Untersuchungsoberfläche in dem Anzeigeelement an, während einer geringen Verfahrgeschwindigkeit ein großer Abbildungsmaßstab entspricht und die Anzeigeeinheit einen kleinen Bereich der Untersuchungseinheit mit einer entsprechend höheren und/oder verfeinerten Auflösung anzeigt.

In vorteilhafter Weise umfasst das Ortungssystem eine Anzeigeeinheit, die dazu vorgesehen ist, die Karteninformation auf die Untersuchungsoberfläche zu projizieren. Dadurch kann eine Anordnung des Ortungsobjekts direkt auf der Untersuchungsoberfläche angezeigt werden. Fehler bei der räumlichen Zuordnung der Ortungsdaten durch den Benutzer können vermieden werden. Es kann ein hoher Bedienkomfort erreicht werden.

In vorteilhafter Weise umfasst der Positionssensor zumindest eine Kamera. Dadurch kann eine leicht einrichtbare, besonders präzise, absolute Positionsbestimmung bereitgestellt werden. Unter einer "Kamera" soll in diesem Zusammen-hang eine Kamera verstanden werden, die zu einer kontinuierlichen Erfassung von Bilddaten vorgesehen ist. Die "Kamera" kann als eine optische Kamera, als eine Infrarotkamera oder als eine Kamera für einen anderen Frequenzbereich ausgebildet sein. Bevorzugt ist die Kamera relativ zu der Untersuchungsoberfläche ortsfest angeordnet, beispielsweise auf einem Stativ, und dazu vorgesehen, eine Position des Ortungssensors auf der Untersuchungsoberfläche zu erfassen. Es ist denkbar, dass die Kamera eine einzelne optische Einheit oder eine Mehr-zahl von optischen Einheiten aufweist, und beispielsweise als eine Stereokamera ausgebildet ist.

In einer vorteilhaften Ausgestaltung umfasst das Ortungssystem zumindest eine Markierung, die relativ zu dem Ortungssensor räumlich fixiert ist und dazu vorgesehen ist, von dem Positionssensor erfasst zu werden. Dadurch kann eine leicht einrichtbare, präzise, absolute Positionsbestimmung bereitgestellt werden. Unter einer "Markierung" soll in diesem Zusammenhang insbesondere ein Bereich verstanden werden, der eine von einer Umgebung des Bereichs verschiedene Oberfläche zur Erfassung durch den Positionssensor aufweist. Bevorzugt ist die Markierung zur Erfassung durch eine optische Kamera, eine Infrarotkamera oder eine Kamera für einen anderen Frequenzbereich vorgesehen. Bevorzugt weist die Oberfläche der Markierung eine von einer Umgebung der Markierung verschiedene Farbe und/oder Reflexionseigenschaften, entsprechend einem Frequenzbereich, in dem der Positionssensor empfindlich ist. Besonders bevorzugt weist das Ortungssystem eine Mehrzahl von Markierungen auf, die jeweils dazu vorgesehen sind, Positionsdaten zu liefern, wenn einige der Markierungen während des Ortungsvorgangs zumindest zeitweise für den Positionssensor verdeckt sind.

Ferner wird vorgeschlagen, dass die Auswerteeinheit dazu vorgesehen ist, in Abhängigkeit von den Positionsdaten ein Warnsignal auszugeben. Dadurch kann ein Ortungsvorgang besonders einfach auf einen festgelegten Untersuchungsbereich begrenzt werden. Bevorzugt weist die Auswerteeinheit einen von dem Benutzer festlegbaren Untersuchungsbereich auf und ist dazu vorgesehen, ein Warnsignal auszugeben, wenn die aktuell erfassten Positionsdaten in einem Randbereich des Untersuchungsbereichs angeordnet sind oder außerhalb des Untersuchungsbereichs angeordnet sind.

In einer vorteilhaften Weise ist die Auswerteeinheit dazu vorgesehen, in Abhängigkeit von einer Verfahrgeschwindigkeit des Ortungssensors ein Warnsignal auszugeben. Dadurch kann eine hohe Datenqualität der Karteninformation sichergestellt werden. Bevorzugt ist die Auswerteeinheit dazu vorgesehen, ein Warnsignal auszugeben, wenn die Verfahrgeschwindigkeit einen oberen Schwellenwert überschreitet. Grundsätzlich ist es auch denkbar, dass die Auswerteeinheit dazu vorgesehen ist, den Ortungsvorgang abzubrechen und dies dem Benutzer anzuzeigen. Unter einem oberen "Schwellenwert" soll in diesem Zusammenhang insbesondere ein Wert verstanden werden, der von dem Benutzer festlegbar oder systembedingt ist und/oder während des Messvorgangs von der Auswerteeinheit anhand der Qualität der Ortungsdaten ermittelt wird und unterhalb dessen eine Qualität der Ortungsdaten zumindest zufriedenstellend ist.

Ferner wird vorgeschlagen, dass, die Auswerteeinheit dazu vorgesehen ist, eine Ortungsrichtung eines Ortungsobjekts relativ zu dem Ortungssensor zu ermitteln. Dadurch kann dem Benutzer die Ortungsrichtung angezeigt werden d.h. ein Bereich der Untersuchungsoberfläche, in dem Ortungsobjekte angeordnet sind, kann gezielt untersucht werden. Es kann ein Ortungssystem für einen besonders effizienten Ortungsvorgang bereitgestellt werden. Unter "ermitteln" soll in diesem Zusammenhang insbesondere verstanden werden, dass die Auswerteeinheit dazu vorgesehen ist, die Ortungsrichtung aus erfassten und beispielsweis in dem Zwischenspeicher abgelegten Ortungsdaten mittels einer Berechnungsvorschrift ableitet. Es ist auch denkbar, dass der Ortungssensor selbst zu einer Erfassung der Ortungsrichtung vorgesehen ist.

Ferner wird eine handgeführte Ortungseinheit vorgeschlagen mit einem Ortungssensor eines erfindungsgemäßen Ortungssystems.

Dadurch kann eine besonders bedienungsfreundliche Ortungseinheit bereitgestellt werden. Unter einer "Ortungseinheit" soll in diesem Zusammenhang insbesondere eine Einheit verstanden mit einem Gehäuse, das zumindest den Ortungssensor, den Positionssensor, die Auswerteeinheit und die Datenquelle aufnimmt.

Darüber hinaus wird eine handgeführte Ortungseinheit vorgeschlagen mit einem Ortungssensor und mit einer Anzeigeeinheit eines erfindungsgemäßen Ortungssystems. Dadurch kann eine besonders kompakte und flexibel einsetzbare Ortungseinheit bereitgestellt werden. Unter einer "Ortungseinheit" soll in diesem Zusammenhang insbesondere eine Einheit verstanden mit einem Gehäuse, das zumindest den Ortungssensor, den Positionssensor, die Auswerteeinheit, und die Anzeigeeinheit aufnimmt. In vorteilhafter Weise besitzt eine solche Ortungseinheit auch zumindest eine Datenquelle.

Ferner wird eine Auswerteeinheit eines erfindungsgemäßen Ortungssystems vorgeschlagen. Dadurch kann eine besonders flexibel einsetzbare Auswerteeinheit bereitgestellt werden.

Ferner wird ein Verfahren vorgeschlagen zu einer Ortung von unter einer Untersuchungsoberfläche verborgenen Ortungsobjekten, bei dem eine Auswerteeinheit Ortungsdaten eines Ortungssensors Positionsdaten eines Positionssensors zuordnet und eine zumindest zweidimensionale Karteninformation bestimmt und ausgibt und die zumindest zweidimensionale Karteninformation abhängig von Daten einer Datenquelle modifiziert. Dadurch kann ein Benutzer besonders einfach und intuitiv Ortungsobjekte erkennen, indem er die Karteninformation interpretiert.

Es kann ein Ortungssystem bereitgestellt werden, das einen besonders kurzen Schulungsaufwand erfordert.

Das erfindungsgemäße Ortungssystem soll hierbei nicht auf die oben beschriebene Anwendung und Ausführungsform beschränkt sein. Insbesondere kann das erfindungsgemäße Ortungssystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Ortungssystem und ein Gebäudeteil in einer perspektivischen Ansicht,
- Fig. 2: eine schematische Darstellung von Einheiten des Ortungssystems und ihrer Verbindungen,
- Fig. 3: eine Schemazeichnung zum Aufbau einer zweidimensionalen Karteninformation mit Sensormesswerten,
- Fig. 4: eine Schemazeichnung zum Aufbau der zweidimensionalen Karteninformation in einer Anzeige,
- Fig. 5: eine Schemazeichnung zum Aufbau der zweidimensionalen Karteninformation nach einem Interpolationsschritt,
- Fig. 6: eine Schemazeichnung zum Aufbau der zweidimensionalen Karteninformation nach einem Kontrastverstärkungsschritt,
- Fig. 7: eine perspektivische Ansicht des Ortungssystems mit einer Datenquelle,

- Fig. 8: ein weiteres Ausführungsbeispiel des erfindungsgemäßen Ortungssystems in einer perspektivischen Ansicht,
- Fig. 9: eine schematische Darstellung von Einheiten des Ortungssystems für das weitere Ausführungsbeispiel,
- Fig. 10: eine perspektivische Ansicht für das weitere Ausführungsbeispiel mit einer Kamera,
- Fig. 11: ein drittes Ausführungsbeispiel des erfindungsgemäßen Ortungssystems in einer perspektivischen Ansicht und
- Fig. 12: eine schematische Darstellung von Einheiten des Ortungssystems für das dritte Ausführungsbeispiel.

### Beschreibung der Ausführungsbeispiele

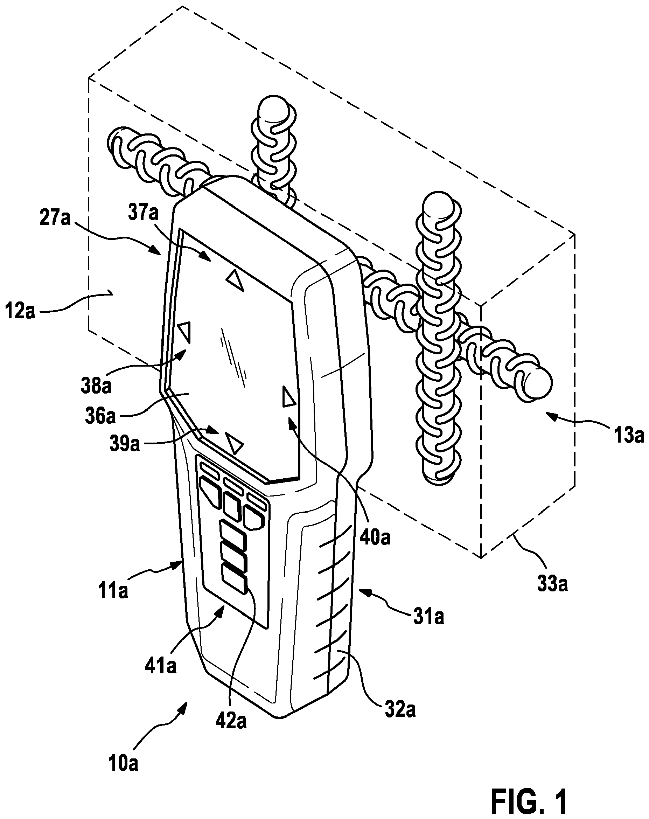

Figur 1 zeigt ein erstes erfindungsgemäßes Ortungssystem 10a mit einem handgeführten Ortungssensor 11a, der dazu vorgesehen ist, Ortungsdaten zu unter einer Untersuchungsoberfläche 12a verborgenen Ortungsobjekten 13a zu erfassen. Das Ortungssystem 10a weist eine Ortungseinheit 31a auf, die den Ortungssensor 11a umfasst, sowie ein Gehäuse 32a, das in einem montierten Zustand den Ortungssensor 11a hält und schützt. Der Ortungssensor 11a ist in dem vorliegenden Ausführungsbeispiel als ein induktiver Sensor ausgebildet und umfasst eine Spule und einen Oszillator und ist dazu vorgesehen, elektromagnetische Eigenschaften eines unter der Untersuchungsoberfläche 12a angeordneten Raumes zu erfassen, wie beispielsweise eine elektrische oder magnetische Leitfähigkeit oder eine elektrische oder magnetische Suszeptibilität. Der Ortungssensor 11a ist dazu vorgesehen, von Hand über die Untersuchungsoberfläche 12a geführt zu werden, die als eine Oberfläche eines Gebäudeteils 33a, beispielsweise als eine Oberfläche einer Gebäudewand, eines Gebäudebodens oder einer Gebäudedecke ausgebildet ist. Ein in einem Bereich unter der Untersuchungsoberfläche 12a angeordnetes Ortungsobjekt 13a, beispielsweise eine Bewehrung, eine Leitung, ein Rohr, eine Armierung oder ein Hohlraum, verändern ein von dem Ortungssensor 11a erzeugtes elektromagnetisches Feld im Vergleich zu einem Bereich, der frei von einem solchen Objekt ist. Der Sensor ist dazu vorgesehen, eine solche Veränderung in einem kontinuierlichen Wertebereich zu erfassen.

Das Ortungssystem 10a umfasst einen Positionssensor 14a, der dazu vorgesehen ist, zu den Ortungsdaten zuordenbare Positionsdaten zu erfassen. In einem montierten Zustand hält und schützt das Gehäuse 32a der Ortungseinheit 31a den Positionssensor 14a. Das Gehäuse 32a hält den Ortungssensor 11a und den Positionssensor 14a in einer zumindest im Wesentlichen festen Relativposition zueinander. In dem vorliegenden Ausführungsbeispiel weist das Ortungssystem 10a ein Koordinatensystem auf, das als ein Bezugssystem für die Positionsdaten vorgesehen ist. Das Koordinatensystem ist als ein orthogonales Koordinatensystem ausgebildet. Der Positionssensor 14a übermittelt die Positionsdaten bezogen auf einen Ursprung des Koordinatensystems. Das Ortungssystem 10a ist dazu vorgesehen, anhand einer Benutzereingabe den Ursprung des Koordinatensystems einem Bezugspunkt auf der Untersuchungsoberfläche 12a zuzuordnen. Grundsätzlich ist es auch denkbar, dass der Bezugspunkt außerhalb der Untersuchungsoberfläche 12a angeordnet ist. Die Positionsdaten bilden ein Positionskoordinatenpaar das einen x-Wert und einen y-Wert aufweist.

In dem vorliegenden Ausführungsbeispiel ist der Positionssensor 14a als ein optischer Positionssensor 14a ausgebildet. Der Positionssensor 14a umfasst zwei Laserlichtquellen, deren Strahlungsrichtungen senkrecht zueinander in einer Ebene parallel zu der Untersuchungsoberfläche 12a angeordnet sind. Der Positionssensor 14a ist dazu vorgesehen, aus einer Bestimmung einer Phasenlage von einem ausgesandten Lichtstrahl zu einem reflektierten Lichtstrahl einen Abstand des Ortungssensors 11a von weiteren Gebäudeteilen, beispielsweise von einem Gebäudeboden, einer Gebäudedecke oder einer Gebäudewand zu bestimmen. Der Positionssensor 14a ist in dem vorliegenden Ausführungsbeispiel dazu vorgehen, eine Position des Ortungssensors 11a absolut zu bestimmen, d.h. eine Positionsbestimmung ist unabhängig von einer unmittelbar vorher eingenommenen Position des Ortungssensors 11a. Grundsätzlich ist es denkbar, dass das Ortungssystem 10a mehrere Bezugspunkte aufweist.

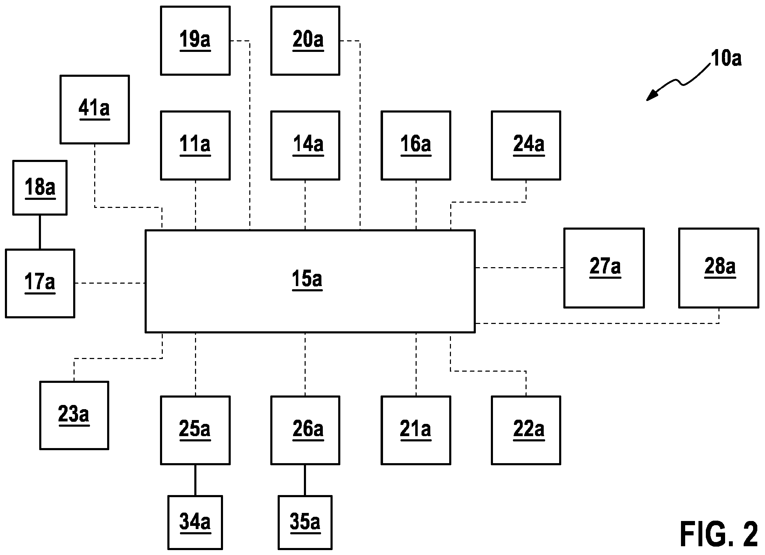

Das Ortungssystem 10a umfasst eine Auswerteeinheit 15a, die dazu vorgesehen ist, eine zweidimensionale Karteninformation aus den Ortungsdaten und den Positionsdaten zu bestimmen und bereitzustellen. Die Auswerteeinheit 15a ist mit dem Ortungssensor 11a und dem Positionssensor 14a zur Übermittlung von Daten verbunden und dazu vorgesehen, den Ortungsdaten des Ortungssensors 11a die Positionsdaten des Positionssensors 14a zuzuordnen (vgl. Figur 2).

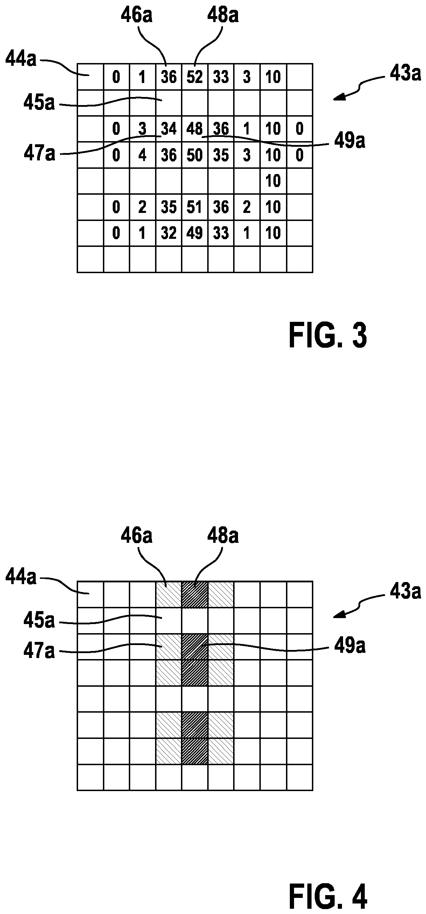

Es ist denkbar, dass die Auswerteeinheit 15a den Ortungsdaten weitere Daten, beispielsweise eine Uhrzeit zuordnet. Die zweidimensionale Karteninformation ist als eine Menge von Feldern 44a, 45a, 46a, 47a, 48a, 49a ausgebildet. Die Felder 44a, 45a, 46a, 47a, 48a, 49a sind beispielhaft in den Figuren 3 bis 6 mit Bezugszeichen versehen. Die zweidimensionale Karteninformation weist die Struktur einer Matrix 43a mit Komponenten auf, die in Zeilen und Spalten angeordnet sind. Eine Komponente der Matrix 43a entspricht einem Feld 44a, 45a, 46a, 47a, 48a, 49a der Karteninformation. Jeder Ausgabewert ist einem Feld 44a, 45a, 46a, 47a, 48a, 49a zugeordnet. Eine Feldposition wird durch ein Kartenkoordinatenpaar festgelegt, das einen Karten-x-Wert und einen Karten-y-Wert aufweist. Die Auswerteeinheit 15a ist dazu vorgesehen, den Ortungsdaten aufgrund der Verknüpfung mit den Positionsdaten des Positionssensors 14a jeweils einem Feld 44a, 45a, 46a, 47a, 48a, 49a der Karteninformation zuzuordnen.

Es ist denkbar, dass die Auswerteeinheit 15a die Ortungsdaten genau einem Feld 44a, 45a, 46a, 47a, 48a, 49a zuordnet oder mehreren Feldern 44a, 45a, 46a, 47a, 48a, 49a zuordnet. Es ist auch denkbar, dass mehrere Ortungsdaten einem Feld 44a, 45a, 46a, 47a, 48a, 49a zugeordnet werden und dass die Auswerteeinheit 15a dazu die Ortungsdaten gewichtet. Grundsätzlich sind verschiedene zweckmäßige Gewichtungen anwendbar, und die Gewichtungen können abhängig von den Positionsdaten ausgebildet sein. In einem Betriebsmodus passt die Auswerteeinheit 15a eine Zuordnung von Ortungsdaten zu Feldern 44a, 45a, 46a, 47a, 48a, 49a einer Datendichte an und verfeinert insbesondere die Zuordnung und damit eine räumliche Auflösung und verbessert die Karteninformation. Bei einem Ortungsvorgang, bei dem der Benutzer die Untersuchungsoberfläche 12a oder einen Bereich der Untersuchungsoberfläche 12a mehrfach mit der Ortungseinheit 31a und insbesondere mit dem Ortungssensor 11a und der als ein weitere Ortungssensor ausgebildeten dritten Datenquelle 19a überfährt, vergrößert sich eine Datendichte und die Auswerteeinheit 15a verfeinert die Zuordnung von Ortungsdaten zu den Feldern 44a, 45a, 46a, 47a, 48a, 49a der Karteninformation und erhöht und/oder verfeinert eine räumliche Auflösung der Karteninformation. In einem Betriebsmodus ermittelt die Auswerteeinheit 15a aus den Ortungsdaten eine Tiefe der Ortungsobjekte 13a, die einem Abstand der Ortungsobjekte 13a von der Untersuchungsoberfläche 12a entspricht. Grundsätzlich ist es denkbar, dass der Ortungssensor 11a dazu vorgesehen ist, die Tiefe der Ortungsobjekte 13a direkt zu erfassen und an die Auswerteeinheit 15a zu übermitteln.

In einem Betriebsmodus ordnet die Auswerteeinheit 15a die Ortungsdaten, d.h. Induktivitätswerte des Ortungssensors 11a mittels der Positionsdaten direkt den Feldern 44a, 45a, 46a, 47a, 48a, 49a der zweidimensionalen Karteninformation zu. Grundsätzlich können die Ortungsdaten, je nach Sensortyp, auch eine andere physikalische und/oder chemische Größe wiedergeben, wie beispielsweise eine Spannung, eine Stromstärke eine Laufzeitdifferenz oder eine Phasenlage. Es ist auch denkbar, dass die Auswerteeinheit 15a in dem Betriebsmodus Ortungsdaten von Ortungssensoren verschiedenen Typs zusammenführt, d.h. fusioniert.

In dem vorliegenden Ausführungsbeispiel weisen die Ausgabewerte der Karteninformation einen Farbwert einer diskreten Farbskala auf. Die Auswerteeinheit 15a bestimmt den Farbwert zu einer Kennzeichnung von Bereichen, die ein unter der Untersuchungsoberfläche 12a verborgenes Ortungsobjekt 13a enthalten.

In einem Ortungsvorgang weist eine Matrix 43a der Karteninformation Felder 44a, 45a ohne Messwerte auf, Felder 46a, 47a die einem mittleren Messwerten entsprechen, sowie Felder 48a, 49a, die hohen Messwerten entsprechen. In den Figuren 3 bis 6 sind beispielhaft Felder 44a, 45a, 46a, 47a, 48a, 49a mit Bezugszeichen versehen. In einem Betriebsmodus ordnet die Auswerteeinheit 15a verschiedenen Stufen von Ortungsdaten unterschiedliche Farbwerten zu und kennzeichnet Felder 44a, 45a ohne Messwert des Ortungssensors 11a und/oder mit einem Messwert von null mit einem ersten Farbwert, Felder 46a, 47a mit einem mittlerer Messwerte durch einen weiteren Farbwert und Felder 48a, 49a mit einem hoher Messwerte durch einen dritten Farbwert. Grundsätzlich ist es auch denkbar, dass die Karteninformation Farbwerte einer kontinuierlichen oder einer quasi-kontinuierlichen Farbskala aufweist.

Ferner weisen die Ausgabewerte einen Helligkeitswert auf zu einer Anzeige der Tiefe der Ortungsobjekte 13a. Ein niedriger Helligkeitswert entspricht dabei beispielsweise einer großen Tiefe, ein hoher Helligkeitswert entspricht dabei einer geringen Tiefe. Die Auswerteeinheit 15a ist dazu vorgesehen, eine Skala der Farbwerte und eine Skala der Helligkeitswerte dynamisch anzupassen in Abhängigkeit von einem Wertebereich der Ortungsdaten in einem vorgegebenen räumlichen Bereich. Grundsätzlich ist es denkbar, dass die Auswerteeinheit 15a zu einer Auswahl der Farbskala und/oder Helligkeitsskala durch einen Benutzer vorgesehen ist und dass der Benutzer auch eine Zuordnung der Skalen zu Objektmerkmalen einstellen kann. Das Ortungssystem 10a gemäß dem Ausführungsbeispiel der Figur 1 umfasst eine Mehrzahl von Datenquellen 16a, 17a, 19a, 20a, 21a, 22a 23a, 24a, 25a, 26a, die dazu vorgesehen sind, Daten zu einer Modifikation der Karteninformation bereitzustellen (vgl. Figur 2). Eine erste der Datenquellen 16a des Ortungssystems 10a ist als ein Zeit- und Taktgeber ausgebildet. Die erste Datenquelle 16a ist dazu vorgesehen, Daten zu einer Modifikation der Karteninformation bereitzustellen. Die Datenquelle 16a ist dazu vorgesehen, eine Uhrzeit und einen Zeittakt an die Auswerteeinheit 15a zu übermitteln. Grundsätzlich ist es denkbar, dass die Datenquelle 16a als eine Schnittstelle zu einem Service ausgebildet ist, von dem eine Uhrzeit und ein Zeittakt abrufbar sind. Die Auswerteeinheit 15a ist dazu vorgesehen, die Karteninformation aufgrund der Daten der Datenquelle 16a zu modifizieren.

Die Auswerteeinheit 15a ist dazu vorgesehen, die Karteninformation in Echtzeit zu bestimmen und bereitzustellen. Die Auswerteeinheit 15a verarbeitet in einem Betriebszustand jeweils die Daten des Ortungssensors 11a und des Positionssensors 14a seriell in der Reihenfolge ihrer Erfassung durch den Ortungssensor 11a und den Positionssensor 14a. Eine Verarbeitungsrate lässt bei dem Benutzer den Eindruck entstehen, dass Ortungsdaten für einen mit dem Ortungssensor 11a überfahrenen Bereich unmittelbar zugeordnet und als Karteninformation bereitgestellt werden. Eine Datenrate von Ortungsdaten und Positionsdaten, die von der Auswerteeinheit 15a verarbeitet wird, ist an eine Verarbeitungsgeschwindigkeit der Auswerteeinheit 15a angepasst, d.h. Daten, die von der Auswerteeinheit 15a nicht unmittelbar verarbeitet werden können, bleiben unberücksichtigt.

Eine weitere der Datenquellen 17a umfasst einen Zwischenspeicher 18a für die Ortungsdaten, die Positionsdaten, sowie für die Zuordnung der Ortungsdaten zu den Positionsdaten. Der Zwischenspeicher 18a ist dazu vorgesehen, die Ortungsdaten, die Positionsdaten, sowie die Zuordnung der Ortungsdaten zu den Positionsdaten abrufbar zu speichern. Die Auswerteeinheit 15a ist dazu vorgesehen, die Ortungsdaten, die Positionsdaten sowie die Zuordnung der Ortungsdaten zu den Positionsdaten in dem Zwischenspeicher 18a abzulegen. Es ist denkbar, dass der Zwischenspeicher 18a dazu vorgesehen ist, zusätzlich einen Zeitpunkt, zu der die Ortungsdaten erfasst wurden, abrufbar zu speichern, und dass die Auswerteeinheit 15a dazu vorgesehen ist, zusammen mit den Ortungsdaten den Zeitpunkt, zu dem die Ortungsdaten empfangen wurden, in dem Zwischenspeicher 18a abzulegen. Die Auswerteeinheit 15a ist dazu vorgesehen, die in dem Zwischenspeicher 18a abgelegten Daten zu ergänzen und fortzuschreiben und insbesondere eine räumliche Auflösung der Daten zu erhöhen und/oder zu verfeinern.

Die Auswerteeinheit 15a ist dazu vorgesehen, die Ortungsdaten zu interpolieren. Die Auswerteeinheit 15a ist dazu vorgesehen, eine interpolierte zweidimensionale Karteninforamation bereitzustellen, d.h. zumindest für einen Teil der Felder 44a, 45a, 46a, 47a, 48a, 49a der zweidimensionalen Karteninformation, insbesondere für Felder 44a, 45a ohne Ortungsdaten, Interpolationsdaten bereitzustellen. In einem Ortungsvorgang übermittelt der Ortungssensor 11a aktuelle Ortungsdaten an die Auswerteeinheit 15a und der Positionssensor 14a übermittelt aktuelle Positionsdaten an die Auswerteeinheit 15a. Die Auswerteeinheit 15a ordnet die Ortungsdaten den Positionsdaten zu, bestimmt ein aktuelles Feld 45a, und fragt in einem Betriebsmodus den Zwischenspeicher 18a nach Ortungsdaten ab, die Feldern 46a, 47a in einer Umgebung des aktuellen Feldes 45a zugeordnet sind. Die Auswerteeinheit 15a gewichtet die aktuellen Ortungsdaten und die Ortungsdaten aus dem Zwischenspeicher 18a und ermittelt so einen Interpolationswert für das aktuelle Feld 45a. Grundsätzlich sind verschiedene zweckmäßige Gewichtungen anwendbar. Es ist denkbar, dass die Ortungsdaten aus dem Zwischenspeicher 18a für die Ermittlung des Ausgabewerts für die aktuellen Positionsdaten unberücksichtigt bleiben. Die Auswerteeinheit 15a interpoliert räumlich Ortungsdaten aus einer Umgebung eines Feldes 44a, 45a, 46a, 47a, 48a, 49a, die in dem Zwischenspeicher 18a abgelegt sind, zur Ermittlung eines Interpolationswertes und gewichtet dazu die Ortungsdaten aus einer Umgebung des Feldes 44a, 45a, 46a, 47a, 48a, 49a. Grundsätzlich sind verschiedene zweckmäßige Gewichtungen anwendbar. Die Auswerteeinheit 15a erzeugt mittels Interpolation Ausgabewerte für Punkte in einer Umgebung von aktuellen Positionsdaten.

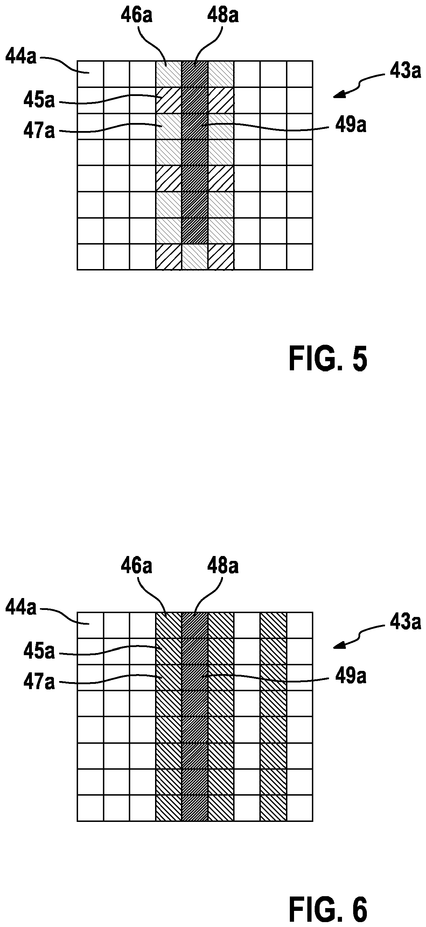

Die Auswerteeinheit 15a umfasst ein nicht näher dargestelltes Datenverbesserungsmodul und ist dazu vorgesehen, einen Kontrast der zweidimensionalen Karteninformation zu verstärken, beispielsweise einen Farbwert von Feldern 46a, 47a, denen mittlere Messwerte des Ortungssensors 11a zugeordnet sind, zu verändern, und Strukturen der Karteninformation erkennbar zu machen. Figur 6 zeigt eine kontrastverstärkte zweidimensionale Karteninformation, in der eine vertikal verlaufende Struktur 50a und einer weitere vertikal verlaufende Struktur 51a erkennbar werden. Die Auswerteeinheit 15a ist dazu vorgesehen, einen Bereich der Karteninformation bei einer erneuten Ortung von Ortungsobjekten 13a, die dem Bereich der Karteninformation zugeordnet sind, zu aktualisieren und zu verbessern, insbesondere durch eine höhere räumliche Auflösung. Die Auswerteeinheit 15a prüft für aktuelle Ortungsdaten und Positionsdaten, ob der Zwischenspeicher 18a einen entsprechenden Datensatz mit einem gleichen Positionskoordinatenpaar aus einer vorangegangenen Messung enthält. Wenn das der Fall ist, liest die Auswerteeinheit 15a die gefundenen Ortungsdaten aus dem Zwischenspeicher 18a aus und bezieht sie in eine Berechnung der Ausgabewerte mit ein und verwendet dabei eine Gewichtung der aktuellen Ortungsdaten gegenüber den in dem Zwischenspeicher 18a abgelegten Daten. Grundsätzlich sind verschiedene zweckmäßige Gewichtungen anwendbar.

Es ist denkbar, dass der Zwischenspeicher 18a jedes erfasste Ortungsdatum speichert oder dass der Zwischenspeicher 18a eine begrenzte Zahl von Ortungsdaten bezogen auf ein Positionskoordinatenpaar speichert oder dass der Zwischenspeicher 18a nur einen gemittelten Wert der dem Positionskoordinatenpaar zugeordneten Ortungsdaten speichert. Grundsätzlich ist es denkbar, dass das Ortungssystem 10a einen Permanentspeicher aufweist, der dazu vorgesehen ist, in dem Zwischenspeicher 18a abgelegte Daten aufzunehmen und für einen nachfolgenden Ortungsvorgang zur Verfügung zu stellen. Es ist denkbar, dass der Permanentspeicher und der Zwischenspeicher 18a als ein einziger Speicher ausgebildet sind. In einem Betriebsmodus vergleicht die Auswerteeinheit 15a aktuelle Ortungsdaten zu aktuellen Positionsdaten mit in dem Zwischenspeicher 18a abgelegten Ortungsdaten, die benachbarten Positionsdaten zugeordnet sind, und ermittelt daraus die Tiefe der Ortungsobjekte 13a und/oder verbessert einen Wert für die Tiefe, der aus den Ortungsdaten allein ermittelt und in dem Zwischenspeicher 18a abgelegt wurde.

Eine dritte der Datenquellen 19a ist als ein weiterer Ortungssensor ausgebildet. Die dritte Datenquelle 19a ist dazu vorgesehen, Daten zu einer Modifikation der Karteninformation bereitzustellen. In dem vorliegenden Ausführungsbeispiel ist die dritte Datenquelle 19a als ein AC-Sensor ausgebildet und dazu vorgesehen, von einer Wechselspannung hervorgerufene Signale zu erfassen, wie sie von spannungsführenden Ortungsobjekten 13a ausgehen. Die dritte Datenquelle 19a ist zu einer Datenübermittlung mit der Auswerteeinheit 15a verbunden. Die Auswerteeinheit 15a führt in einem Betriebsmodus die Daten der Ortungssensoren 11a zusammen, fusioniert die Daten und modifiziert die zweidimensionale Karteninformation, d.h. sie ordnet beispielsweise einem oder mehreren Feldern der Karteninformation weitere Darstellungsattribute zu. Grundsätzlich ist es denkbar, dass die dritte Datenquelle 19a analog zu dem Ortungssensor 11a als ein induktiver Sensor ausgebildet und dazu vorgesehen ist, elektromagnetische Eigenschaften von unter der Untersuchungsoberfläche 12a verborgenen Ortungsobjekten 13a zu erfassen, wie beispielsweise eine elektrische oder magnetische Leitfähigkeit und/oder eine elektrische oder magnetische Suszeptibilität. In einem montierten Zustand hält und schützt das Gehäuse 32a der Ortungseinheit 31a die dritte Datenquelle 19a. Das Gehäuse 32a hält den Ortungssensor 11a und den Positionssensor 14a und die dritte Datenquelle 19a einer zumindest im Wesentlichen festen Relativposition zueinander. Der Positionssensor 14a ist dazu vorgesehen, eine Position des Ortungssensors 11a und der dritten Datenquelle 19a zu bestimmen.

Die Auswerteeinheit 15a ist dazu vorgesehen, die Daten der dritten Datenquelle 19a auszuwerten und die Karteninformation zu modifizieren. In einem Betriebszustand übermittelt die dritte Datenquelle 19a die erfassten Daten an die Auswerteeinheit 15a. Die Auswerteeinheit 15a ordnet die Daten den aktuellen Positionsdaten des Positionssensors 14a zu. Die Auswerteeinheit 15a vergleicht die Ortungsdaten des Ortungssensors 11a und die als Ortungsdaten ausgebildeten Daten der dritten Datenquelle 19a und ermittelt daraus einen konsistenten Ausgabewert. Die Auswerteeinheit 15a bewertet die Ortungsdaten des Ortungssensors 11a und der dritten Datenquelle 19a in Bezug auf Störungen der Messung und daraus resultierende Messfehler und schließt Ortungsdaten, die als fehlerhaft bewertet wurden, bei der Ermittlung und Modifikation der Karteninformation aus.

In einem Betriebsmodus ermittelt die Auswerteeinheit 15a darüber hinaus anhand der Ortungsdaten und der Daten der dritten Datenquelle 19a die Tiefe der Ortungsobjekte 13a und/oder verbessert einen Wert für die Tiefe, der aus den Ortungsdaten des Ortungssensors 11a allein oder aus den Ortungsdaten des Ortungssensors 11a und Daten des Zwischenspeichers 18a ermittelt wurde. Grundsätzlich ist es denkbar, dass die Auswerteeinheit 15a dazu vorgesehen ist, aus den Daten der dritten Datenquelle 19a weitere Eigenschaften von Ortungsobjekten 13a zu ermitteln und in die Karteninformation zu integrieren, beispielsweise eine Materialeigenschaft oder eine Stromstärke im Falle von stromdurchflossenen Leitern.

Die Auswerteeinheit 15a ist dazu vorgesehen, eine Ortungsrichtung eines Ortungsobjekts 13a relativ zu dem Ortungssensor 11a zu ermitteln. Die Auswerteeinheit 15a ist dazu vorgesehen, die Ortungsdaten des Ortungssensors 11a, die Ortungsdaten der als ein weiterer Ortungssensor ausgebildeten dritten Datenquelle 19a und die Daten des Zwischenspeichers 18a zu vergleichen und die Ortungsrichtung des Ortungsobjekts 13a relativ zu dem Ortungssensor 11a zu ermitteln. Es ist auch ein Betriebsmodus denkbar, in dem die Auswerteeinheit 15a die Daten von zwei Datenquellen, beispielsweise des Ortungssensors 11a und der als weiterer Ortungssensor ausgebildeten dritten Datenquelle 19a vergleicht und die Ortungsrichtung des Ortungsobjekts 13a ermittelt. Ferner ist denkbar, dass der Ortungssensor 11a dazu vorgesehen ist, die Ortungsrichtung des Ortungsobjekts 13a relativ zu dem Ortungssensor 11a zu erfassen und Ortungsrichtungsdaten an die Auswerteeinheit 15a zu übermitteln. In einem Betriebsmodus wertet die Auswerteeinheit 15a die von dem Ortungssensor 11a erfassten Ortungsrichtungsdaten aus.

Eine vierte der Datenquellen 20a ist als ein weiterer Positionssensor ausgebildet. Die vierte Datenquelle 20a ist dazu vorgesehen, Daten zu einer Modifikation der zweidimensionalen Karteninformation bereitzustellen. In dem vorliegenden Ausführungsbeispiel sind die vierte Datenquelle 20a und der Positionssensor 14a analog zueinander ausgebildet, d.h. die vierte Datenquelle 20a ist dazu vorgesehen, eine Position des Ortungssensors 11a und der als weiterer Ortungssensor ausgebildeten dritten Datenquelle 20a zu bestimmen. In einem montierten Zustand hält und schützt das Gehäuse 32a der Ortungseinheit 31a die vierte Datenquelle 20a. Das Gehäuse 32a hält den Ortungssensor 11a und den Positionssensor 14a und die beiden Datenquellen 19a, 20a in einer zumindest im Wesentlichen festen Relativposition zueinander. Die vierte Datenquelle 20a ist dazu vorgesehen, Daten zu einer Modifikation der Karteninformation bereitzustellen. Grundsätzlich ist es denkbar, dass die vierte Datenquelle 20a als ein Positionssensor ausgebildet ist, der dazu vorgesehen ist, eine Position des Ortungssensors 11a und der als ein weiterer Ortungssensor 11a ausgebildeten dritten Datenquelle 19a relativ, d.h. relativ zu einer vorausgehenden Position zu bestimmen. Es ist ferner denkbar, dass die vierte Datenquelle 20a eine höhere Auflösung aufweist im Vergleich zu dem Positionssensor 14a und dass die Auswerteeinheit 15a in einem Betriebsmodus mittels der Daten der vierten Datenquelle 20a eine Positionsbestimmung des Ortungssensors 11a und der als weiterer Ortungssensor ausgebildeten dritten Datenquelle 19a verfeinert, beispielsweise in Abhängigkeit von der Verfahrgeschwindigkeit und/oder der Beschleunigung der Bewegung der Ortungseinheit 31a entlang der Untersuchungsoberfläche 12a.

Die Auswerteeinheit 15a ist dazu vorgesehen, die Daten der weiteren Datenquelle 20a auszuwerten und die Karteninformation zu modifizieren. In einem Betriebszustand übermittelt die weitere Datenquelle 20a die erfassten Daten an die Auswerteeinheit 15a. Die Auswerteeinheit 15a ordnet die Daten des Ortungssensors 11a und der als weiterer Ortungssensor ausgebildeten dritten Datenquelle 19a den aktuellen Positionsdaten des Positionssensors 14a und der als weiterer Positionssensor ausgebildeten weiteren Datenquelle 19a zu. Die Auswerteeinheit 15a vergleicht die Positionsdaten des Positionssensors 14a und die Daten der weiteren Datenquelle 20a und ermittelt daraus einen konsistenten Ausgabewert. Die Auswerteeinheit 15a bewertet die Daten des Positionssensors 14a und der weiteren Datenquelle 20a erkennt, ob Daten mit hoher Wahrscheinlichkeit einen großen Messfehler aufweisen, und blendet fehlerbehaftete Daten aus, d.h. schließt sie von der Erzeugung oder Modifikation der Karteninformation aus. In einer Ausgestaltung, in der die weitere Datenquelle 20a eine höhere Auflösung aufweist, präzisiert die Auswerteeinheit 15a die Daten des Positionssensors 14a. Es ist denkbar, dass die Auswerteeinheit 15a mittels der Positionsdaten des Positionssensors 14a eine Absolutposition des Ortungssensors 11a und der als Ortungssensor ausgebildeten Datenquelle 19a eine Bezugsposition zu bestimmen und dass die Auswerteeinheit 15a für eine genauere Bestimmung der Position des Ortungssensors 11a und der dritten Datenquelle 19a die Daten der vierten Datenquelle 19a auswertet.

Die Auswerteeinheit 15a ist dazu vorgesehen, aus den Positionsdaten des Positionssensors 14a und den Daten der vierten Datenquelle 20a eine Winkellage der handgeführten Ortungseinheit 31a, des Ortungssensors 11a und der als weiterer Ortungssensor ausgebildeten dritten Datenquelle 19a aufgrund einer Drehung um eine Achse senkrecht zu der Untersuchungsoberfläche 12a zu bestimmen und bei der Zuordnung der Ortungsdaten zu Positionsdaten einzubeziehen.

Eine fünfte der Datenquellen 21a ist als ein Drehungssensor ausgebildet. In dem vorliegenden Ausführungsbeispiel ist der Drehsensor dazu vorgesehen eine Winkellage des Ortungssensors 11a relativ zu einem Magnetfeld der Erde zu erfassen. Die fünfte Datenquelle 21a ist dazu vorgesehen, Daten zu einer Modifikation der zweidimensionalen Karteninformation bereitzustellen.

Die Daten der fünften Datenquelle 21a beschreiben eine Winkellage der handgeführten Ortungseinheit 31a und des Ortungssensors 11a und der als Ortungssensor ausgebildeten dritten Datenquelle 19a, die eine Drehung um eine senkrecht zu der Untersuchungsoberfläche 12a angeordneten Achse angibt. Die Auswerteeinheit 15a ist dazu vorgesehen, die zweidimensionale Karteninformation aufgrund der Daten der fünften Datenquelle 21a zu modifizieren. In einem Betriebsmodus übermittelt die fünfte Datenquelle 21a die Winkellage an die Auswerteeinheit 15a und die Auswerteeinheit 15a bezieht die Daten der fünften Datenquelle 21a bei der Zuordnung der Ortungsdaten zu den Positionsdaten ein. Bei einer Ausgestaltung des Ortungssystems 10a mit einem Drehungssensor ist es denkbar, dass eine Auswertung der Positionsdaten und der Daten der als weiterer Positionssensor 14a ausgebildeten weiteren Datenquelle 20a zur Bestimmung einer Winkellage der handgeführten Ortungseinheit 31a durch die Auswerteeinheit 15a entfällt. Es ist auch denkbar, dass die Auswerteeinheit 15a die Ergebnisse einer Bestimmung der Winkellage mittels der fünften Datenquelle 21a und eine Bestimmung der Winkellage mittels der Positionsdaten und der Daten der als weiterer Positionssensor ausgebildeten vierten Datenquelle 20a miteinander vergleicht und die Daten korrigiert.

Eine sechste der Datenquellen 22a ist als ein Beschleunigungssensor ausgebildet. In dem vorliegenden Ausführungsbeispiel ist die sechste Datenquelle 22a als ein massenträgheitsbasierter Beschleunigungssensor ausgebildet. Die sechste Datenquelle 22a ist dazu vorgesehen, Daten zu einer Modifikation der zweidimensionalen Karteninformation bereitzustellen. Die Auswerteeinheit 15a ist dazu vorgesehen, die zweidimensionale Karteninformation aufgrund der Daten der sechsten Datenquelle 22a zu modifizieren. In einem Betriebsmodus übermittelt die sechste Datenquelle 22a Beschleunigungsdaten an die Auswerteeinheit 15a. Die Auswerteeinheit 15a integriert die Beschleunigungsdaten und bestimmt eine Verfahrgeschwindigkeit und Positionsdaten. Die Auswerteeinheit 15a ordnet die Beschleunigungsdaten und die Verfahrgeschwindigkeit den Ortungsdaten zu und bewertet eine Qualität der Ortungsdaten, die mit wachsender Beschleunigung und wachsender Verfahrgeschwindigkeit abnimmt. Die Auswerteeinheit 15a modifiziert in den Ausgabewerten eine Gewichtung und/oder Unschärfe für Ortungsdaten, die einer hohen Beschleunigung und/oder einer hohen Verfahrgeschwindigkeit zugeordnet wurden. Die Auswerteeinheit 15a versieht die Ausgabedaten mit einem Attribut für die Beschleunigung, die Verfahrgeschwindigkeit und/oder die Qualität.

Es ist denkbar, dass das Attribut als ein Darstellungsattribut, wie beispielsweise ein Kontrastwert, ein Grauwert, ein Farbwert, eine Farbsättigung oder eine Helligkeit ausgebildet ist. Unsichere Daten in der zweidimensionalen Karteninformation erscheinen dann beispielsweise grau. Der Benutzer kann dann beurteilen, welche Bereiche der Untersuchungsoberfläche 12a ein weiteres Mal mit der Ortungseinheit 31a überfahren werden, beispielsweise, wenn in bestimmten Bereichen eine höhere Datenqualität erforderlich ist. Der Benutzer überfährt Bereiche der Untersuchungsoberfläche 12a gegebenenfalls ein weiteres Mal oder mehrere Male und das Ortungssystem 10a ergänzt, verdichtet und/oder verbessert die zweidimensionale Karteninformation und die Anzeige der Karteninformation, insbesondere erhöht und/oder verfeinert das Ortungssystem 10a in einem Betriebsmodus die räumliche Auflösung der Karteninformation und/oder der Anzeigeeinheit 27a.

Die Auswerteeinheit 15a ist dazu vorgesehen, in Abhängigkeit von einer Verfahrgeschwindigkeit des Ortungssensors 11a ein Warnsignal auszugeben. Die Auswerteeinheit 15a ist dazu vorgesehen, ein Warnsignal auszugeben, wenn eine Genauigkeit und/oder Verlässlichkeit der Ortungsdaten aufgrund einer zu hohen Beschleunigung und/oder aufgrund einer zu hohen Verfahrgeschwindigkeit unter einen vorgegebenen und/oder vorgebbaren Wert sinkt. In dem vorliegenden Ausführungsbeispiel weist das Ortungssystem 10a ein Signalelement auf, das zur Übermittlung des Warnsignals mit der Auswerteeinheit 15a verbunden und dazu vorgesehen ist, dem Benutzer das Warnsignal anzuzeigen. In dem vorliegenden Ausführungsbeispiel ist das Signalelement als ein akustisches Signalelement ausgebildet. Grundsätzlich ist es auch denkbar, dass das Signalelement als ein optisches Signalelement oder Vibrationselement ausgebildet ist oder dazu vorgesehen ist, ein anderes zweckmäßiges Signal auszugeben.

Die Auswerteeinheit 15a ist dazu vorgesehen, zumindest einen Teil der Ortungsdaten bei einer Erzeugung oder bei der Modifikation der Karteninformation auszuschließen. Der Ortungssensor 11a und die dritte Datenquelle 19a, die als ein weiterer Ortungssensor ausgebildet ist, übermitteln in einem Betriebsmodus Ortungsdaten an die Auswerteeinheit 15a. Die Auswerteeinheit 15a vergleicht die Ortungsdaten wechselseitig und mit einem erwartbaren Wertebereich. Die Auswerteeinheit 15a weist eine Bewertungsvorschrift auf, die beispielsweise in Abhängigkeit von einer Abweichung der Ortungsdaten untereinander oder in Abhängigkeit eines Vergleichs der Ortungsdaten mit einem erwartbaren Wertebereichs, einen Wert für eine Datenqualität bereitstellt. Die Bewertungsvorschrift berücksichtigt ferner Daten des Positionssensors 14a und Daten der vierten Datenquelle 20a, die als ein weiterer Positionssensor ausgebildet ist, sowie die Daten der sechsten Datenquelle 22a, die als ein Beschleunigungssensor ausgebildet ist, und prüft, ob die Ortungsdaten zuverlässig Positionsdaten zugeordnet werden können. Die Auswerteeinheit 15a schließt Ortungsdaten in Abhängigkeit von der ermittelten Datenqualität und Ortungsdaten, die nicht zuverlässig Positionsdaten zuordenbar sind, bei einer Erzeugung oder bei einer Modifikation der Karteninformation aus.

Eine siebte der Datenquellen 24a ist als eine Kamera ausgebildet, die zumindest in einem Betriebszustand ein Bild der Untersuchungsoberfläche 12a aufnimmt. In dem vorliegenden Ausführungsbeispiel ist die Kamera als eine elektronische, optische Kamera ausgebildet. Die siebte Datenquelle 24a ist dazu vorgesehen, Daten zu einer Modifikation der zweidimensionalen Karteninformation bereitzustellen. Die Auswerteeinheit 15a ist dazu vorgesehen, die zweidimensionale Karteninformation aufgrund der Daten der siebten Datenquelle 24a zu modifizieren.

In einem Betriebsmodus übermittelt die siebte Datenquelle 24a kontinuierlich das Bild der Untersuchungsoberfläche 12a an die Auswerteeinheit 15a. Die Auswerteeinheit 15a integriert das Bild in die zweidimensionale Karteninformation und überlagert die Ortungsdaten mit dem Bild. Dazu referenziert die Auswerteeinheit 15a die Bilddaten in Bezug auf die Positionsdaten des Positionssensors 14a. Das Ortungssystem 10a ist dazu vorgesehen, anhand von Benutzereingaben einen Bildpunkt der Kamera oder eine Mehrzahl von Bildpunkten zu dem Bezugspunkt oder der Mehrzahl von Bezugspunkten für den Positionssensor 14a zuzuordnen. Die Auswerteeinheit 15a ist dazu vorgesehen, die Zuordnung der Bildpunkte zu den Bezugspunkten des Positionssensors 14a für eine Skalierung und einer Referenzierung der Ortungsdaten in Bezug auf das Bild der als Kamera ausgebildeten siebten Datenquelle 24a auszuwerten.

Eine achte der Datenquellen 25a umfasst ein Bilderkennungsmodul 34a. Das Bilderkennungsmodul 34a ist dazu vorgesehen, anhand der Ortungsdaten des Ortungssensors 11a Modelldaten bereitzustellen. In einem Betriebszustand wertet das Bilderkennungsmodul 34a Ortungsdaten aus, die in dem Zwischenspeicher 18a abgelegt sind und extrahiert strukturelle Eigenschaften der Ortungsdaten. Beispielsweise interpretiert das Bilderkennungsmodul 34a Differenzen in den Werten entlang einer Linie als eine Objektkante. Das Bilderkennungsmodul 34a stellt geometrische Objektdaten bereit, welche Ortungsobjekten 13a oder Grenzen von Ortungsobjekten 13a entsprechen können und übermittelt die geometrischen Objektdaten an die Auswerteeinheit 15a. Die Auswerteeinheit 15a ist dazu vorgesehen, die geometrischen Objektdaten mit den Ortungsdaten zu überlagern und so die Kartendarstellung zu modifizieren.

Eine neunte der Datenquellen 26a umfasst ein Modellierungsmodul 35a. Das Modellierungsmodul 35a ist dazu vorgesehen, anhand der Ortungsdaten des Ortungssensors 11a Modelldaten bereitzustellen. In einem Betriebszustand wertet das Modellierungsmodul 35a Ortungsdaten aus, die in dem Zwischenspeicher 18a abgelegt sind und rekonstruiert Strukturen und/oder Oberflächen von Ortungsobjekten 13a, welche den Ortungsdaten entsprechen. In einem Betriebsmoduls leitet das Modellierungsmodul 35a Tiefeninformationen aus den Ortungsdaten ab. Es ist denkbar, dass das Modellierungsmodul 35a einen Satz von Objektgrundformen aufweist, und die Objektgrundformen mit den Ortungsdaten vergleicht und eine Objektgrundform mit einer besten Übereinstimmung auswählt.

Das Modellierungsmodul 35a verbessert dabei eine Übereinstimmung der Objektgrundformen mit den Ortungsdaten durch eine Skalierung, Drehung, Verschiebung und/oder eine andere zweckmäßige geometrische Operation. Das Modellierungsmodul 35a stellt Modelldaten bereit, welche Ortungsobjekten 13a oder Oberflächen von Ortungsobjekten 13a entsprechen, und übermittelt die Modelldaten an die Auswerteeinheit 15a. In einem Betriebsmodus klassifiziert das Modellierungsmodul 35a die Ortungsobjekte 13a nach Material, insbesondere unterscheidet das Modellierungsmodul 35a Hohlrräume von ausgefüllten Räumen, metallische von nichtmetallischen Ortungsobjekten 13a und spannungslose von spannungsführenden Ortungsobjekten 13a. Grundsätzlich ist es denkbar, dass das Modellierungsmodul 35a für weitere Klassifizierungen vorgesehen ist, beispielsweise anhand weiterer Materialien, eines Wassergehalts oder anderer Kriterien. Die Auswerteeinheit 15a ist dazu vorgesehen, die Modelldaten mit den Ortungsdaten zu überlagern und die Karteninformation zu modifizieren. Die Auswerteeinheit 15a modifiziert die Karteninformation anhand der Modelldaten zur Klassifizierung und stellt beispielsweise metallische Ortungsobjekte 13a rot, elektrische Leitungen, insbesondere 50 Hz-Leitungen, grün und weitere Ortungsobjekte 13a blau dar.

Grundsätzlich ist es auch denkbar, dass die Auswerteeinheit 15a die Modelldaten zur Klassifizierung mittels Mustern und/oder Symbolen darstellt.

Das Ortungssystem 10a umfasst eine Anzeigeeinheit 27a, die dazu vorgesehen ist, einen Ausschnitt der zweidimensionalen Karteninformation anzuzeigen. Die Anzeigeeinheit 27a ist mit der Auswerteeinheit 15a zur Übermittlung der Karteninformation verbunden. Sie ist dazu vorgesehen, die Karteninformation maßstäblich anzuzeigen. Die Anzeigeeinheit 27a ist ferner dazu vorgesehen, in einem Betriebszustand die gesamte zweidimensionale Karteninformation anzuzeigen. Die Anzeigeeinheit 27a weist ein Anzeigeelement 36a für die Karteninformation auf. In dem vorliegenden Ausführungsbeispiel ist das Anzeigeelement 36a als eine farbfähige OLED-Anzeige ausgebildet. Die Anzeigeeinheit 27a ist als ein Teil der Ortungseinheit 31a ausgebildet und fest mit dem Gehäuse 32a der Ortungseinheit 31a verbunden. Die Auswerteeinheit 15a ist mit der Anzeigeeinheit 27a zu einer Übermittlung von Ausgabewerten verbunden. Grundsätzlich ist es denkbar, dass die Anzeigeeinheit 27a getrennt von der Ortungseinheit 31a ausgebildet ist und über eine drahtlose Verbindung zu einer Übermittlung von Ausgabewerten verbunden ist, beispielsweise über eine Punkt-zu-Punkt ad-hoc Verbindung. Der angezeigte Ausschnitt weist einen Abbildungsmaßstab auf, der einem Verhältnis von Erstreckungen der Karteninformation im Anzeigeelement 36a zu Erstreckungen eines zugeordneten Bereichs der Untersuchungsoberfläche 12a entspricht. Der Abbildungsmaßstab weist einen gleichen Abbildungsmaßstab für eine erste Dimension und für eine zweite Dimension auf. Die Anzeigeeinheit 27a ist dazu vorgesehen, die von der Anzeigeeinheit 27a ermittelte Ortungsrichtung des Ortungsobjekts 13a relativ zu dem Ortungssensor 11a anzuzeigen. Das Anzeigeelement 36a für die Karteninformation weist in dem vorliegenden Ausführungsbeispiel vier Bereiche 37a, 38a, 39a, 40a auf, die für eine Anzeige der Ortungsrichtung vorgesehen sind. Grundsätzlich ist es auch denkbar, dass die Anzeigeeinheit 27a weitere Anzeigeelemente zur Anzeige der Ortungsrichtung aufweist, die getrennt von dem Anzeigeelement 36a für die Karteninformation ausgebildet sind.

Die Auswerteeinheit 15a ist dazu vorgesehen, in Abhängigkeit von den Positionsdaten ein Warnsignal auszugeben. In einem Betriebsmodus gibt die Auswerteeinheit 15a ein erstes Warnsignal aus, wenn die Positionsdaten in einem Randbereich des angezeigten Ausschnitts angeordnet sind. Der Randbereich weist eine Breite von 10 Prozent einer Gesamterstreckung des angezeigten Ausschnitts auf. Grundsätzlich kann die Breite auch einen anderen zweckmäßigen Wert aufweisen. In einem Betriebsmodus gibt die Auswerteeinheit 15a ein weiteres in seiner Art von dem ersten Warnsignal verschiedenes Warnsignal aus, wenn die aktuellen Positionsdaten außerhalb des angezeigten Ausschnitts angeordnet sind. Das Ortungssystem 10a umfasst ein Signalelement, das zu einer Übermittlung der Warnsignale mit der Auswerteeinheit 15a verbunden und dazu vorgesehen ist, dem Benutzer die Warnsignale anzuzeigen. In dem vorliegenden Ausführungsbeispiel ist das Signalelement als ein akustisches Signalelement ausgebildet. Grundsätzlich ist es auch denkbar, dass das Signalelement als ein optisches Signalelement oder Vibrationselement ausgebildet ist oder dazu vorgesehen ist, ein anderes zweckmäßiges Signal auszugeben. Ferner ist es denkbar, dass die Auswerteeinheit 15a dazu vorgesehen ist, eine Richtungsinformation bereitzustellen, die dem Benutzer anzeigt, in welcher Richtung Positionen des angezeigten Ausschnitts relativ zu den aktuellen Positionsdaten liegen. Die Richtungsinformation unterstützt den Benutzer bei einer Führung der Ortungseinheit 31a in den Bereich der Untersuchungsoberfläche 12a, der dem angezeigten Ausschnitt entspricht.

Die Anzeigeeinheit 27a ist dazu vorgesehen, den dargestellten Ausschnitt der Karteninformation in Abhängigkeit von den Positionsdaten zu bestimmen. In einem Betriebsmodus ermittelt die Anzeigeeinheit 27a für jeden Koordinatenwert Grenzen eines Wertebereichs von erfassten Positionsdaten, d.h. ein Minimum und ein Maximum der erfassten x-Koordinatenwerte, sowie ein Minimum und ein Maximum der erfassten y-Koordinatenwerte. Der Wertebereich von erfassten Positionsdaten verändert sich dynamisch aufgrund der Bewegung der Ortungseinheit 31a über die Untersuchungsoberfläche 12a. In dem Betriebsmodus weist der angezeigte Ausschnitt einen festen Abbildungsmaßstab auf, der ein Verhältnis einer Länge einer Strecke auf der Untersuchungsoberfläche 12a zu einer Länge eines Bildes der Strecke in dem angezeigten Ausschnitt angibt. Die Anzeigeeinheit 27a verschiebt den angezeigten Ausschnitt in eine Richtung, die einer Verfahrrichtung der Ortungseinheit 31a entspricht, und zeigt zuletzt erfasste und zugeordnete Ortungsdaten innerhalb des Ausschnitts an. Die Anzeigeeinheit 27a verschiebt den angezeigten Ausschnitt, wenn zuletzt erfasste Positionsdaten in einem Randbereich des angezeigten Ausschnitts angeordnet sind. In einem Betriebsmodus verschiebt die Anzeigeeinheit 27a den angezeigten Ausschnitt dynamisch und zentriert eine Position des Ortungssensors 11a in dem angezeigten Ausschnitt.

Die Anzeigeeinheit 27a ist dazu vorgesehen, den angezeigten Ausschnitt der Karteninformation zu skalieren. Die Anzeigeeinheit 27a ist dazu vorgesehen, den angezeigten Ausschnitt in Abhängigkeit von den Positionsdaten zu skalieren. Die Anzeigeeinheit 27a weist einen Betriebsmodus auf, in dem der angezeigte Ausschnitt einen gesamten Bereich von erfassten Positionsdaten umfasst. Die Anzeigeeinheit 27a passt in dem Betriebsmodus die Skalierung an, d.h. die Anzeigeeinheit 27a verkleinert den Abbildungsmaßstab und der angezeigte Ausschnitt entspricht einem größeren Bereich der Untersuchungsoberfläche 12a.

In einem weiteren Betriebsmodus weist die Anzeigeeinheit 27a ein Zeitintervall auf, das eine Menge von Positionsdaten einschränkt, die für eine Bestimmung des angezeigten Ausschnitts herangezogen werden. Für den Wertebereich werden in dem weiteren Betriebsmodus nur Positionsdaten berücksichtigt, die von einem aktuellen Zeitpunkt ausgehend in dem Zeitintervall erfasst wurden. In einem Ortungsvorgang, bei dem in dem Zeitintervall der Ortungssensors 11a innerhalb eines kleinen Bereichs der Untersuchungsoberfläche 12a angeordnet ist, vergrößert die Anzeigeeinheit 27a den Abbildungsmaßstab und der angezeigte Ausschnitt entspricht einem kleineren Bereich der Untersuchungsoberfläche 12a. Die Anzeigeeinheit 27a erhöht und/oder verfeinert eine Auflösung des angezeigten Ausschnitts und zeigt mehr Details eines Bereichs der Untersuchungsoberfläche 12a, der dem angezeigten Ausschnitt entspricht. Der Benutzer steuert über eine Ausdehnung einer Verfahrbewegung die Auflösung des angezeigten Ausschnitts.

Die Anzeigeeinheit 27a ist dazu vorgesehen, den dargestellten Ausschnitt der Karteninformation in Abhängigkeit von einer Verfahrgeschwindigkeit zu skalieren. Die Anzeigeeinheit 27a weist eine Berechnungsvorschrift auf, die angibt, wie sich der Abbildungsmaßstab aus der Verfahrgeschwindigkeit ergibt. In einem Betriebsmodus bestimmt die Anzeigeeinheit 27a den Abbildungsmaßstab in Abhängigkeit von der Verfahrgeschwindigkeit. Die Anzeigeeinheit 27a bestimmt für eine große Verfahrgeschwindigkeit einen kleinen Abbildungsmaßstab und für eine kleine Verfahrgeschwindigkeit einen großen Abbildungsmaßstab. Für eine kleine Verfahrgeschwindigkeit stellt die Anzeigeeinheit 27a einen großen Abbildungsmaßstab ein und erhöht und/oder verfeinert eine Auflösung des angezeigten Ausschnitts und zeigt mehr Details eines Bereichs der Untersuchungsoberfläche 12a, der dem angezeigten Ausschnitt entspricht. Der Benutzer steuert über die Verfahrgeschwindigkeit die Auflösung des angezeigten Ausschnitts.

Das Ortungssystem 10a weist eine weitere Anzeigeeinheit 28a auf, die dazu vorgesehen ist, die Karteninformation auf die Untersuchungsoberfläche 12a zu projizieren. In dem vorliegenden Ausführungsbeispiel weist die weitere Anzeigeeinheit 28a einen farbfähigen Projektor auf. Das Ortungssystem 10a ist dazu vorgesehen, anhand von Benutzereingaben einen Projektionspunkt des Projektors oder eine Mehrzahl von Projektionspunkten zu dem Bezugspunkt oder der Mehrzahl von Bezugspunkten für den Positionssensor 14a zuzuordnen. Die Auswerteeinheit 15a ist dazu vorgesehen, die Zuordnung der Projektionspunkte zu den Bezugspunkten des Positionssensors 14a für eine Skalierung und einer Referenzierung der Ortungsdaten in Bezug auf die von dem Projektor angezeigte Karteninformation auszuwerten. Grundsätzlich ist es denkbar, dass das Ortungssystem 10a die weitere Anzeigeeinheit 28a als die einzige Anzeigeeinheit 27a aufweist.

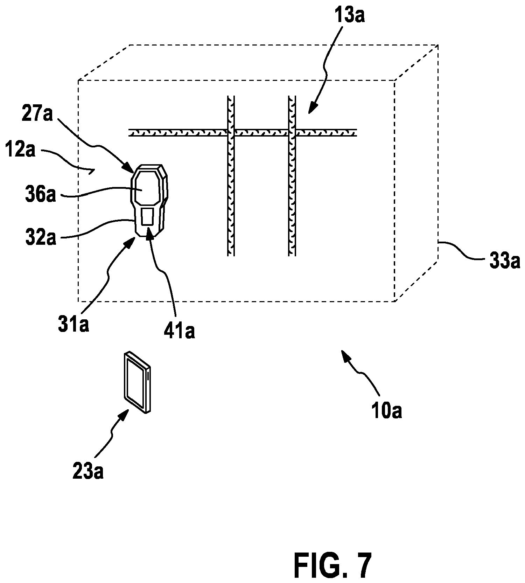

Eine zehnte der Datenquellen 23a ist als eine externe Anwendung ausgebildet. Die zehnte Datenquelle 23a ist dazu vorgesehen, Daten zu einer Modifikation der zweidimensionalen Kartendarstellung bereitzustellen. In dem vorliegenden Ausführungsbeispiel ist die zehnte Datenquelle 23a als eine Anwendung einer mobilen Recheneinheit, beispielsweise eines Smartphones oder eines tragbaren Computers ausgebildet (vgl. Figur 7). Die zehnte Datenquelle 23a ist dazu vorgesehen, Steuerungsdaten an die Auswerteeinheit 15a zu übermitteln, beispielsweise zur Bestimmung des angezeigten Ausschnitts, zu einer Skalierung, zu einer Festlegung von Anzeigeparametern, wie Farbskalen, Zuordnung von Farbskalen, Helligkeit oder Kontrast. Die zehnte Datenquelle 23a ist ferner dazu vorgesehen, externe Daten an die Auswerteeinheit 15a zu übermitteln, beispielsweise globale Positionskoordinaten, wie Längen- und Breitengrad und/oder Metadaten zur Protokollierung des Ortungsvorgangs. Die zehnte Datenquelle 23a ist zur Datenübermittlung mit der Auswerteeinheit 15a verbunden. Die Auswerteeinheit 15a ist dazu vorgesehen, die zweidimensionale Karteninformation aufgrund der Daten der zehnten Datenquelle 23a zu modifizieren. Grundsätzlich ist es denkbar, dass die mobile Recheneinheit eine Anzeigeeinheit für das Ortungssystem 10a umfasst.

Die Ortungseinheit 31a umfasst eine Eingabeeinheit 41a, die für Benutzereingaben vorgesehen ist. Die Eingabeeinheit 41a ist zur Übermittlung der Benutzereingaben mit der Auswerteeinheit 15a verbunden. die Eingabeeinheit 41a weist eine Mehrzahl von Eingabeelementen 42a auf, die als Tasten ausgebildet sind. Die Auswerteeinheit 15a ist dazu vorgesehen, die Benutzereingaben auszuwerten und Parameter zur Erzeugung und Modifikation der Karteninformation anzupassen, wie beispielsweise Farbskalen, eine Zuordnung der Farbskalen, den Abbildungsmaßstab der Anzeigeeinheit 27a, eine Empfindlichkeit des Ortungssensors 11a und der als Ortungssensor ausgebildeten dritten Datenquelle 19a, Schwellenwerte des Bilderkennungsmoduls 34a und des Modellierungsmoduls 35a, Schwellenwerte für die Winkellage der Ortungseinheit 31a, die Verfahrgeschwindigkeit und die Beschleunigung.

Bei einem Ortungsvorgang von unter der Untersuchungsoberfläche 12a verborgenen Ortungsobjekten 13a bewegt der Benutzer die Ortungseinheit 31a mit dem Ortungssensor 11a und dem Positionssensor 14a, sowie mit der als ein weiterer Ortungssensor ausgebildeten dritten Datenquelle 19a und der als ein weiterer Positionssensor ausgebildeten vierten Datenquelle 20a über die Untersuchungsoberfläche 12a. Der Ortungssensor 11a erfasst Ortungsdaten der Ortungsobjekte 13a. Ebenso erfasst die als ein weiterer Ortungssensor ausgebildete dritte Datenquelle 19a Ortungsdaten. Der Ortungssensor 11a und die dritte Datenquelle 19a übermitteln die Ortungsdaten an die Auswerteeinheit 15a. Der Positionssensor 14a und die vierte Datenquelle 20a erfassen Positionsdaten und übermitteln diese an die Auswerteeinheit 15a.

Die Auswerteeinheit 15a ordnet die Positionsdaten den Ortungsdaten zu, wertet die Ortungsdaten aus und bestimmt einen Teil der zweidimensionalen Karteninformation. Die weiteren Datenquellen 16a, 17a, 21a, 22a, 23a, 24a, 25a, 26a erfassen Daten und übermitteln diese an die Auswerteeinheit 15a. Die Auswerteeinheit 15a legt Ortungsdaten, Positionsdaten und Daten der weiteren Datenquellen 16a, 17a, 21a, 22a, 23a, 24a, 25a, 26a in dem Zwischenspeicher 18a ab. Die Auswerteeinheit 15a ruft früher erfasste Ortungsdaten und Daten, die Positionen in einer Umgebung der aktuellen Position des Ortungssensors 11a zugeordnet wurden, aus dem Zwischenspeicher 18a ab, vergleicht, prüft und/oder gewichtet Daten und modifiziert die zweidimensionale Karteninformation. Die Auswerteeinheit 15a übermittelt die Karteninformation an die Anzeigeeinheit 27a. Die Anzeigeeinheit 27a prüft den angezeigten Ausschnitt und die Skalierung des Ausschnitts und passt den Ausschnitt und oder die Skalierung des Ausschnitts an. Die Anzeigeeinheit 27a zeigt den Ausschnitt der modifizierten Karteninformation an. Der Benutzer interpretiert die Karteninformation, identifiziert anhand der modifizierten Karteninformation eine Anordnung der Ortungsobjekte 13a und/oder er identifiziert Bereiche der Untersuchungsoberfläche 12a, für welche die Karteninformation unzureichend ist und setzt den Ortungsvorgang für diese Bereiche fort. Die Auswerteeinheit 15a vervollständigt und verbessert im Laufe des Ortungsvorgangs die Karteninformation. Die Auswerteeinheit 15a passt eine räumliche Auflösung der Ortungsdaten in Bezug auf eine Zuordnung zu Positionsdaten für die Karteninformation an. Die Anzeigeeinheit 27a passt eine räumliche Auflösung in Bezug auf den angezeigten Ausschnitt an.

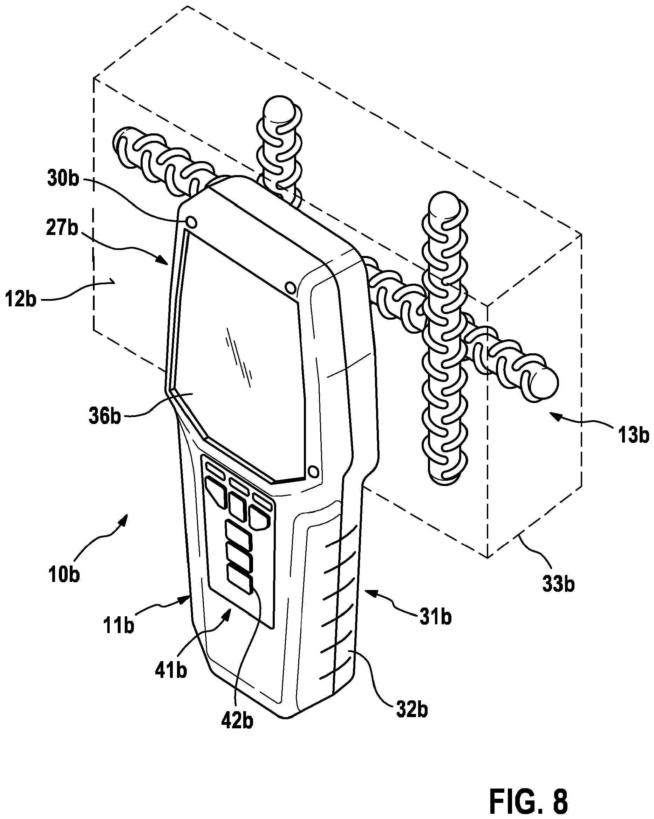

In den Figuren 8 bis 12 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 7, verwiesen werden kann. Zur Unterscheidung der Ausführungsbeispiele ist der Buchstabe a in den Bezugszeichen des Ausführungsbeispiels in den Figuren 1 bis 7 durch die Buchstaben b und c in den Bezugszeichen der Ausführungsbeispiele der Figuren 8 bis 12 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 7, verwiesen werden. Insbesondere sind Merkmale und Eigenschaften der einzelnen Ausführungsformen auch frei miteinander kombinier- und austauschbar.

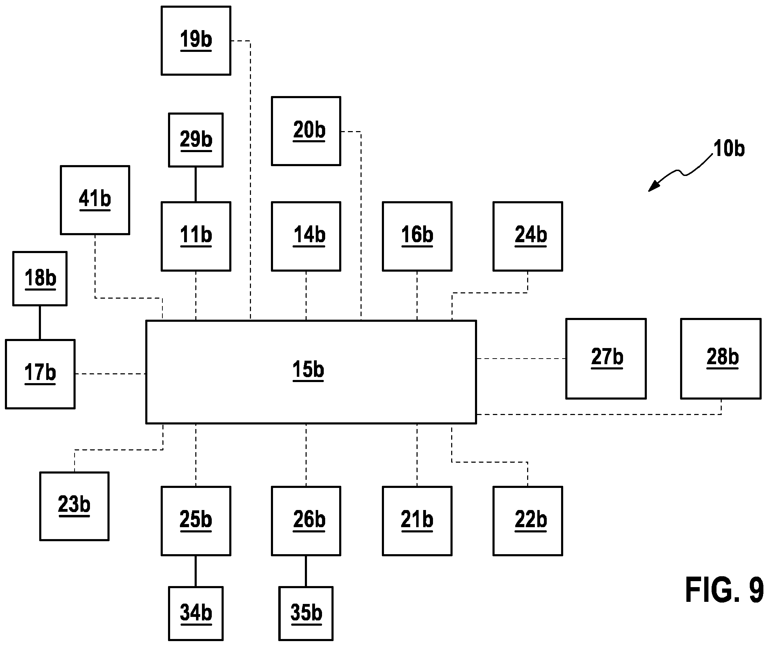

In einem weiteren Ausführungsbeispiel umfasst das Ortungssystem 10b analog zu dem vorangehenden Ausführungsbeispiel einen handgeführten Ortungssensor 11b, der dazu vorgesehen ist, Ortungsdaten zu unter einer Untersuchungsoberfläche 12b verborgenen Ortungsobjekten 13b zu erfassen, ferner einen Positionssensor 14b, der dazu vorgesehen ist, zu den Ortungsdaten zuordenbare Positionsdaten zu erfassen (vgl. Figur 8). Das Ortungssystem 10b weist ferner eine Auswerteeinheit 15b auf, die dazu vorgesehen ist, eine zweidimensionale Karteninformation aus den Ortungsdaten und den Positionsdaten zu bestimmen und bereitzustellen. Das Ortungssystem 10b weist eine Ortungseinheit 31b auf, die den Ortungssensor 11b umfasst, sowie ein Gehäuse 32b, das in einem montierten Zustand den Ortungssensor 11b hält und schützt. Der Ortungssensor 11b ist dazu vorgesehen, von Hand über die Untersuchungsoberfläche 12b geführt zu werden, die als eine Oberfläche eines Gebäudeteils 33b, beispielsweise als eine Oberfläche einer Gebäudewand, eines Gebäudebodens oder einer Gebäudedecke ausgebildet ist. Das Ortungssystem 10b umfasst eine Mehrzahl von Datenquellen 16b, 17b, 19b, 20b, 21b, 22b, 23b, 24b, 25b, 26b, die dazu vorgesehen sind, Daten zu einer Modifikation der Karteninformation bereitzustellen (vgl. Figur 9). Analog zu dem vorangehenden Ausführungsbeispiel umfasst eine der Datenquellen 17b des Ortungssystems 10b einen Zwischenspeicher 18b für die Ortungsdaten, die Positionsdaten, sowie für die Zuordnung der Ortungsdaten zu den Positionsdaten. Der Zwischenspeicher 18b ist dazu vorgesehen, die Ortungsdaten, die Positionsdaten, sowie die Zuordnung der Ortungsdaten zu den Positionsdaten abrufbar zu speichern. Eine weitere der Datenquellen 25b umfasst ein Bilderkennungsmodul 34b. Das Bilderkennungsmodul 34b ist dazu vorgesehen, anhand der Ortungsdaten des Ortungssensors 11b Modelldaten bereitzustellen. Eine dritte der Datenquellen 26b umfasst ein Modellierungsmodul 35b. Das Modellierungsmodul 35b ist dazu vorgesehen, anhand der Ortungsdaten des Ortungssensors 11b Modelldaten bereitzustellen.

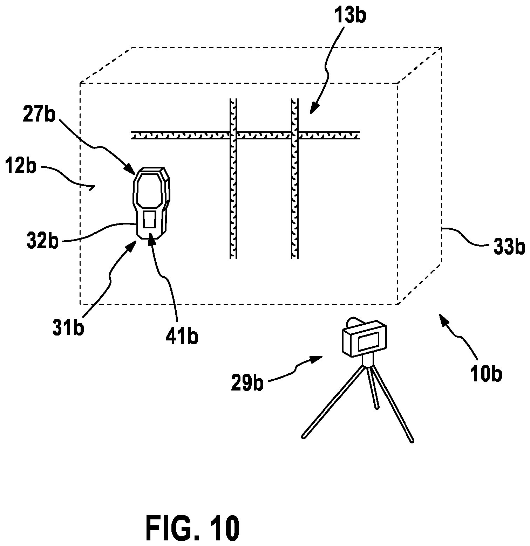

Im Unterschied zu dem vorangehenden Ausführungsbeispiel umfasst der Positionssensor 14b eine Kamera 29b. Die Kamera 29b ist getrennt von der Ortungseinheit 31b als eine optische Kamera 29b ausgebildet, und ist dazu vorgesehen, kontinuierlich Bilddaten bereitzustellen (vgl. Figur 10). In einem Betriebszustand stellt die Kamera 29b Bilddaten der Untersuchungsoberfläche 12b bereit. Der Positionssensor 14b umfasst ferner eine Bildverarbeitungseinheit, die dazu vorgesehen ist, eine Position des Ortungssensors 11b auf der Untersuchungsoberfläche 12b mittels der Bilddaten zu bestimmen. Die Kamera 29b ist mit der Bildverarbeitungseinheit zu einer Übermittlung der Bilddaten verbunden. Die Bildverarbeitungseinheit wertet in einem Betriebsmodus die Bilddaten der Kamera 29b aus und bestimmt den Ortungsdaten zuordenbare Positionsdaten. Die Bildverarbeitungseinheit ist zu einer Übermittlung der Positionsdaten mit der der Auswerteeinheit 15b verbunden. Es ist denkbar, dass die Bildverarbeitungseinheit mittels einer drahtlosen Datenverbindung mit der Auswerteeinheit 15b verbunden ist.

Das Ortungssystem 10b weist eine Mehrzahl von Markierungen 30b auf, die relativ zu dem Ortungssensor 11b räumlich fixiert und dazu vorgesehen ist, von dem Positionssensor 14b erfasst zu werden. In dem vorliegenden Ausführungsbeispiel sind die Markierungen 30b als Teil der Ortungseinheit 31b ausgebildet. Die Markierungen 30b sind als Reflektorplättchen ausgebildet. Die Markierungen 30b sind fest an dem Gehäuse 32b der Ortungseinheit 31b angeordnet.

Das Ortungssystem 10b umfasst eine Anzeigeeinheit 27b, die dazu vorgesehen ist, einen Ausschnitt der zweidimensionalen Karteninformation anzuzeigen.

Die Anzeigeeinheit 27b ist mit der Auswerteeinheit 15b zur Übermittlung der Karteninformation verbunden. Sie ist dazu vorgesehen, die Karteninformation maßstäblich anzuzeigen. Die Anzeigeeinheit 27b weist ein Anzeigeelement 36b für die Karteninformation auf. Das Ortungssystem 10b weist eine weitere Anzeigeeinheit 28b auf, die dazu vorgesehen ist, die Karteninformation auf die Untersuchungsoberfläche 12b zu projizieren. In dem vorliegenden Ausführungsbeispiel weist die weitere Anzeigeeinheit 28b einen farbfähigen Projektor auf.

Die Ortungseinheit 31b umfasst eine Eingabeeinheit 41b, die für Benutzereingaben vorgesehen ist. Die Eingabeeinheit 41b ist zur Übermittlung der Benutzereingaben mit der Auswerteeinheit 15b verbunden. die Eingabeeinheit 41b weist eine Mehrzahl von Eingabeelementen 42b auf, die als Tasten ausgebildet sind. Die Auswerteeinheit 15b ist dazu vorgesehen, die Benutzereingaben auszuwerten und Parameter zur Erzeugung und Modifikation der Karteninformation anzupassen, wie beispielsweise Farbskalen, eine Zuordnung der Farbskalen, den Abbildungsmaßstab der Anzeigeeinheit 27b, eine Empfindlichkeit des Ortungssensors 11b, Schwellenwerte des Bilderkennungsmoduls 34b und des Modellierungsmoduls 35b, Schwellenwerte für die Winkellage der Ortungseinheit 31b, die Verfahrgeschwindigkeit und die Beschleunigung.

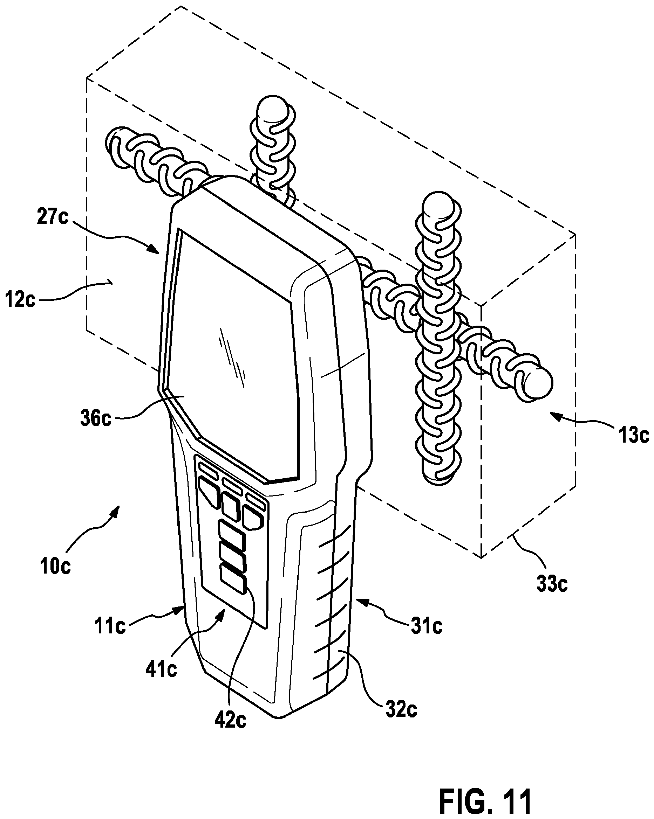

In einem weiteren Ausführungsbeispiel umfasst das Ortungssystem 10c analog zu dem vorangehenden Ausführungsbeispiel einen handgeführten Ortungssensor 11c, der dazu vorgesehen ist, Ortungsdaten zu unter einer Untersuchungsoberfläche 12c verborgenen Ortungsobjekten 13c zu erfassen, ferner einen Positionssensor 14c, der dazu vorgesehen ist, zu den Ortungsdaten zuordenbare Positionsdaten zu erfassen (vgl. Figur 11). Im Unterschied zu den vorangehenden Ausführungsbeispielen weist das Ortungssystem 10c ferner eine Auswerteeinheit 15c auf, die dazu vorgesehen ist, eine dreidimensionale Karteninformation aus den Ortungsdaten und den Positionsdaten zu bestimmen und bereitzustellen. Eine erste Dimension und eine zweite Dimension erstrecken sich parallel zu der Untersuchungsoberfläche 12c, eine dritte Dimension erstreckt sich senkrecht zu der Untersuchungsoberfläche 12c und entspricht einer Tiefe der Ortungsobjekte 13c, d.h. einem Abstand der Ortungsobjekte 13c von der Untersuchungsoberfläche 12c. Die Auswerteeinheit 15c ist dazu vorgesehen, die Tiefe der Ortungsobjekte 13c aus den Ortungsdaten zu ermitteln. Grundsätzlich ist es auch denkbar, dass der Ortungssensor 11c dazu vorgesehen ist, die Tiefe der Ortungsobjekte 13c direkt zu erfassen und an die Auswerteeinheit 15c zu übermitteln.

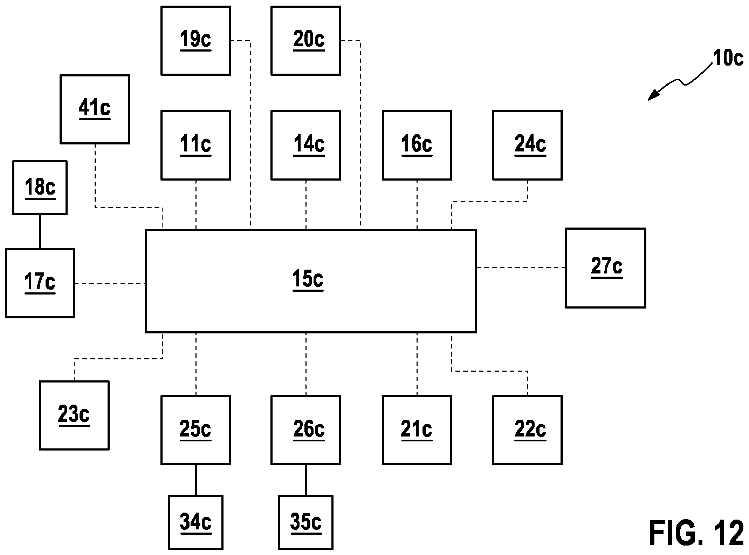

Das Ortungssystem 10c weist eine Ortungseinheit 31c auf, die den Ortungssensor 11c umfasst, sowie ein Gehäuse 32c, das in einem montierten Zustand den Ortungssensor 11c hält und schützt. Der Ortungssensor 11c ist dazu vorgesehen, von Hand über die Untersuchungsoberfläche 12c geführt zu werden, die als eine Oberfläche eines Gebäudeteils 33c, beispielsweise als eine Oberfläche einer Gebäudewand, eines Gebäudebodens oder einer Gebäudedecke ausgebildet ist. Das Ortungssystem 10c umfasst eine Mehrzahl von Datenquellen 16c, 17c, 19c, 20c, 21c, 22c, 23c, 24c, 25c, 26c, die dazu vorgesehen sind, Daten zu einer Modifikation der Karteninformation bereitzustellen (vgl. Figur 12). Analog zu dem vorangehenden Ausführungsbeispiel umfasst eine der Datenquellen 17c des Ortungssystems 10c einen Zwischenspeicher 18c für die Ortungsdaten, die Positionsdaten, sowie für die Zuordnung der Ortungsdaten zu den Positionsdaten. Der Zwischenspeicher 18c ist dazu vorgesehen, die Ortungsdaten, die Positionsdaten, sowie die Zuordnung der Ortungsdaten zu den Positionsdaten abrufbar zu speichern. Eine weitere der Datenquellen 25c umfasst ein Bilderkennungsmodul 34c. Das Bilderkennungsmodul 34c ist dazu vorgesehen, anhand der Ortungsdaten des Ortungssensors 11c Modelldaten bereitzustellen. Eine dritte der Datenquellen 26c umfasst ein Modellierungsmodul 35c. Das Modellierungsmodul 35c ist dazu vorgesehen, anhand der Ortungsdaten des Ortungssensors 11c Modelldaten bereitzustellen.

Analog zu dem vorangehenden Ausführungsbeispiel umfasst eine der Datenquellen 17c des Ortungssystems 10c einen Zwischenspeicher 18c für die Ortungsdaten, die Positionsdaten, sowie für die Zuordnung der Ortungsdaten zu den Positionsdaten. Der Zwischenspeicher 18c ist dazu vorgesehen, die Ortungsdaten, die Positionsdaten, sowie die Zuordnung der Ortungsdaten zu den Positionsdaten abrufbar zu speichern. In einem Betriebsmodus vergleicht die Auswerteeinheit 15c aktuelle Ortungsdaten zu aktuellen Positionsdaten mit in dem Zwischenspeicher 18c c abgelegten Ortungsdaten, die benachbarten Positionsdaten zugeordnet sind, und ermittelt daraus die Tiefe der Ortungsobjekte 13c und/oder verbessert einen Wert für die Tiefe, der aus den Ortungsdaten allein ermittelt und in dem Zwischenspeicher 18c abgelegt wurde.

Eine weitere der Datenquellen 19c ist als ein weiterer Ortungssensor ausgebildet. Die weitere Datenquelle 19c ist dazu vorgesehen, Daten zu einer Modifikation der dreidimensionalen Karteninformation bereitzustellen. Die weitere Datenquelle 19c ist analog zu dem Ortungssensor als ein induktiver Sensor ausgebildet und dazu vorgesehen, elektromagnetische Eigenschaften von unter der Untersuchungsoberfläche verborgenen Objekten zu erfassen, wie beispielsweise eine elektrische oder magnetische Leitfähigkeit und/oder eine elektrische oder magnetische Suszeptibilität. Grundsätzlich ist es denkbar, dass der Ortungssensor als ein elektromagnetischer Sensor eines anderen Typs ausgebildet ist oder für eine Ortung nach einem anderen physikalisch-chemischen Prinzip vorgesehen ist, beispielsweise zur Bestimmung einer Stoffkonzentration. Der Positionssensor 14c ist dazu vorgesehen, eine Position des Ortungssensors 11c und der weiteren Datenquelle 19c zu bestimmen.

In einem Betriebsmodus ermittelt die Auswerteeinheit darüberhinaus anhand der Ortungsdaten und der Daten der weiteren Datenquelle 19c die Tiefe der Ortungsobjekte 13c und/oder verbessert einen Wert für die Tiefe, der aus den Ortungsdaten des Ortungssensors 11c allein oder aus den Ortungsdaten des Ortungssensors und Daten des Zwischenspeichers 18c ermittelt wurde. Grundsätzlich ist es denkbar, dass die Auswerteeinheit 15c dazu vorgesehen ist, aus den Daten der weiteren Datenquelle 19c weitere Eigenschaften von Ortungsobjekten 13c zu ermitteln und in die Karteninformation zu integrieren.

Eine dritte der Datenquellen 25c umfasst ein Bilderkennungsmodul 34c. Das Bilderkennungsmodul 34c ist dazu vorgesehen, anhand der Ortungsdaten des Ortungssensors 11c Modelldaten bereitzustellen. Eine vierte der Datenquellen 26c umfasst ein Modellierungsmodul 35c. Das Modellierungsmodul 35c ist dazu vorgesehen, anhand der Ortungsdaten des Ortungssensors 11c Modelldaten bereitzustellen.

Das Ortungssystem 10c umfasst eine 3D-fähige Anzeigeeinheit 27c, die dazu vorgesehen ist, einen Ausschnitt der dreidimensionalen Karteninformation anzuzeigen. Die Anzeigeeinheit 27c ist mit der Auswerteeinheit 15c zu einer Übermittlung der dreidimensionalen Karteninformation verbunden. Die Anzeigeeinheit 27c weist ein 3D-fähiges Anzeigeelement 36c auf. In dem vorliegenden Ausführungsbeispiel ist das Anzeigeelement 36c als eine farbfähige 3D-OLED-Anzeige ausgebildet. Die Anzeigeeinheit 27c ist als ein Teil der Ortungseinheit 31c ausgebildet und fest mit dem Gehäuse 32c der Ortungseinheit 31c verbunden. Die Auswerteeinheit 15c ist mit der Anzeigeeinheit 27c zur Übermittlung von Ausgabewerten verbunden. Der angezeigte Ausschnitt weist einen Abbildungsmaßstab auf, der einem Verhältnis von Erstreckungen des angezeigten Ausschnitts zu Erstreckungen eines zugeordneten Bereichs der Untersuchungsoberfläche 12c entspricht und der Tiefe. Der Abbildungsmaßstab weist einen gleichen Abbildungsmaßstab für die erste Dimension und die zweite Dimension auf, sowie einen weiteren Abbildungsmaßstab für die dritte Dimension. Grundsätzlich ist es auch denkbar, dass die Anzeigeeinheit 27c getrennt von der Ortungseinheit 31c ausgebildet ist und zu einer Übermittlung der Karteninformation drahtlos mit der Auswerteeinheit 15c verbunden ist. Die Anzeigeeinheit 27c kann beispielsweise als ein 3D-fähiger Monitor ausgebildet sein oder einen Projektor und eine Anzeigefläche und Elemente zur Betrachtung wie beispielsweise Brillen und/oder Shuttervorrichtungen umfassen.

Die Ortungseinheit 31c umfasst eine Eingabeeinheit 41c, die für Benutzereingaben vorgesehen ist. Die Eingabeeinheit 41c ist zur Übermittlung der Benutzereingaben mit der Auswerteeinheit 15c verbunden. die Eingabeeinheit 41c weist eine Mehrzahl von Eingabeelementen 42c auf, die als Tasten ausgebildet sind. Die Auswerteeinheit 15c ist dazu vorgesehen, die Benutzereingaben auszuwerten und Parameter zur Erzeugung und Modifikation der Karteninformation anzupassen, wie beispielsweise Farbskalen, eine Zuordnung der Farbskalen, den Abbildungsmaßstab der Anzeigeeinheit 27c, eine Empfindlichkeit des Ortungssensors 11c, Schwellenwerte des Bilderkennungsmoduls 34c und des Modellierungsmoduls 35c, Schwellenwerte für die Winkellage der Ortungseinheit 31c, die Verfahrgeschwindigkeit und die Beschleunigung.

Das erfindungsgemäße Ortungssystem ist nicht auf die gezeigten, konkreten Ausführungsformen beschränkt.

## Patentansprüche

1. Ortungssystem, insbesondere handgehaltenes Ortungsgerät, mit zumindest einem handgeführten Ortungssensor (11a; 11b; 11c), der dazu vorgesehen ist, Ortungsdaten zu unter einer Untersuchungsoberfläche (12a; 12b; 12c) verborgenen Ortungsobjekten (13a; 13b; 13c) zu erfassen, mit einem Positionssensor (14a; 14b; 14c), der dazu vorgesehen ist, zu den Ortungsdaten zuordenbare Positionsdaten zu erfassen, mit einer Auswerteeinheit (15a; 15b; 15c), die dazu vorgesehen ist, eine zumindest zweidimensionale Karteninformation aus den Ortungsdaten und den Positionsdaten zu bestimmen und bereitzustellen, mit zumindest einer Datenquelle (25a; 25b; 25c), die dazu vorgesehen ist, Daten zu einer Modifikation der zumindest zweidimensionalen Karteninformation bereitzustellen, wobei die Datenquelle (25a; 25b; 25c) einen Zwischenspeicher (18a; 18b; 18c) zumindest für die Ortungsdaten aufweist, **dadurch gekennzeichnet, dass** die Datenquelle (25a; 25b; 25c) ein Bilderkennungsmodul (34a; 34b; 34c) umfasst, das dazu vorgesehen ist, Ortungsdaten des Ortungssensors (11a; 11b; 11c) auszuwerten, die in dem Zwischenspeicher 18a abgelegt sind, und strukturelle Eigenschaften der Ortungsdaten zu extrahieren, wobei das Bilderkennungsmodul (34a; 34b; 34c) an die Auswerteeinheit 15a die strukturellen Eigenschaften als geometrische Objektdaten bereitstellt, wobei die Auswerteeinheit 15a dazu vorgesehen ist, die geometrischen Objektdaten mit den Ortungsdaten zu überlagern.

2. Ortungssystem nach Anspruch 1, **dadurch gekennzeichnet, dass** der Ortungssensor (11a; 11b; 11c) entlang der Untersuchungsoberfläche (12a; 12b; 12c) frei verfahrbar ausgebildet ist.

3. Ortungssystem nach einem der vorhergehenden Ansprüche, **dadurch gekennzeichnet, dass** die Auswerteeinheit (15a; 15b; 15c) dazu vorgesehen ist, die Karteninformation in Echtzeit zu bestimmen und bereitzustellen.

4. Ortungssystem nach einem der vorhergehenden Ansprüche, **dadurch gekennzeichnet, dass** die Auswerteeinheit (15a; 15b; 15c) dazu vorgesehen ist, eine dreidimensionale Karteninformation zu bestimmen und bereitzustellen.

5. Ortungssystem zumindest nach Anspruch 1, **dadurch gekennzeichnet, dass** die Auswerteeinheit (15a; 15b; 15c) dazu vorgesehen ist, einen Bereich der Karteninformation bei einer erneuten Ortung von Ortungsobjekten (13a; 13b; 13c), die dem Bereich der Karteninformation zugeordnet sind, zu aktualisieren.

6. Ortungssystem zumindest nach Anspruch 1, **dadurch gekennzeichnet, dass** die Auswerteeinheit (15a; 15b; 15c) dazu vorgesehen ist, einen Bereich der Karteninformation bei einer erneuten Ortung von Ortungsobjekten (13a; 13b; 13c), die dem Bereich der Karteninformation zugeordnet sind, zu verfeinern.

7. Ortungssystem nach einem der vorhergehenden Ansprüche, **dadurch gekennzeichnet, dass** eine weitere Datenquelle (19a; 19b; 19c) als ein weiterer Ortungssensor ausgebildet ist.

8. Ortungssystem nach einem der vorhergehenden Ansprüche **dadurch gekennzeichnet, dass** eine weitere Datenquelle (20a; 20b; 20c) als ein weiterer Positionssensor ausgebildet ist.

9. Ortungssystem nach einem der vorhergehenden Ansprüche, **dadurch gekennzeichnet, dass** eine weitere Datenquelle (21a; 21b; 21c) als ein Drehungssensor ausgebildet ist, der dazu vorgesehen ist, eine Drehung des Ortungssensors (11a; 11b; 11c) zu erfassen.

10. Ortungssystem nach einem der vorhergehenden Ansprüche, **dadurch gekennzeichnet, dass** eine weitere Datenquelle (22a; 22b; 22c) als ein Beschleunigungssensor ausgebildet ist, der dazu vorgesehen ist, eine Beschleunigungsinformation des Ortungssensors (11a; 11b; 11c) zu erfassen.

11. Ortungssystem nach einem der vorhergehenden Ansprüche, **dadurch gekennzeichnet, dass** eine weitere Datenquelle (23a; 23b; 23c) als eine externe Anwendung ausgebildet ist.

12. Ortungssystem nach einem der vorhergehenden Ansprüche, **dadurch gekennzeichnet, dass** die Datenquelle (24a; 24b; 24c) als eine Kamera ausgebildet ist, die in zumindest einem Betriebszustand ein Bild der Untersuchungsoberfläche (12a; 12b; 12c) aufnimmt.

13. Ortungssystem nach einem der vorhergehenden Ansprüche, **dadurch gekennzeichnet, dass** eine weitere Datenquelle (26a; 26b; 25c) ein Modellierungsmodul (35a; 35b; 35c) umfasst, das dazu vorgesehen ist, anhand der Ortungsdaten des Ortungssensors (11a; 11b; 11c) Modelldaten bereitzustellen.

14. Verfahren zu einer Ortung von unter einer Untersuchungsoberfläche (12a; 12b; 12c) verborgenen Ortungsobjekten (13a; 13b; 13c), bei dem eine Auswerteeinheit (15a; 15b; 15c) Ortungsdaten eines Ortungssensors (11a; 11b; 11c) Positionsdaten eines Positionssensors (14a; 14b; 14c) zuordnet und eine zumindest zweidimensionale Karteninformation bestimmt und ausgibt und die zumindest zweidimensionale Karteninformation anhand von Daten einer Datenquelle (16a, 17a, 19a-26a; 16b, 17b, 19b-26b; 16c, 17c, 19c-26c) modifiziert, wobei die Datenquelle (17a; 17b; 17c) einen Zwischenspeicher (18a; 18b; 18c) zumindest für die Ortungsdaten aufweist, **dadurch gekennzeichnet, dass** mittels eines Bilderkennungsmoduls (34a; 34b; 34c) der Datenquelle Or- tungsdaten des Ortungssensors (11a; 11b; 11c) ausgewertet werden, die in dem Zwischenspeicher 18a abgelegt sind, und strukturelle Eigenschaften der Ortungsdaten extrahiert werden, wobei mittels des Bilderkennungsmoduls (34a; 34b; 34c) die strukturellen Eigenschaften als geometrische Objektdaten der Auswerteeinheit 15a bereitgestellt werden, wobei mittels der Auswerteeinheit 15a die geometrischen Objektdaten mit den Ortungsdaten überlagert werden.

## Claims

1. Locating system, in particular a hand-held locating device, comprising at least one hand-guided locating sensor (11a; 11b; 11c) provided for capturing locating data concerning objects to be located (13a; 13b; 13c) concealed below an examination surface (12a; 12b; 12c), comprising a position sensor (14a; 14b; 14c) provided for capturing position data assignable to the locating data, comprising an evaluation unit (15a; 15b; 15c) provided for determining at least two-dimensional map information from the locating data and the position data and for providing said at least two-dimensional map information, comprising at least one data source (25a; 25b; 25c) provided for providing data concerning a modification of the at least two-dimensional map information, wherein the data source (25a; 25b; 25c) has a buffer memory (18a; 18b; 18c) at least for the locating data, **characterized in that** the data source (25a; 25b; 25c) comprises an image recognition module (34a; 34b; 34c) provided for evaluating locating data of the locating sensor (11a; 11b; 11c) which are stored in the buffer memory (18a) and for extracting structural properties of the locating data, wherein the image recognition module (34a; 34b; 34c) provides the evaluation unit (15a) with the structural properties as geometric object data, wherein the evaluation unit (15a) is provided for superimposing the locating data on the geometric object data.

2. Locating system according to Claim 1, **characterized in that** the locating sensor (11a; 11b; 11c) is embodied such that it is freely movable along the examination surface (12a; 12b; 12c).

3. Locating system according to any of the preceding claims, **characterized in that** the evaluation unit (15a; 15b; 15c) is provided for determining and providing the map information in real time.

4. Locating system according to any of the preceding claims, **characterized in that** the evaluation unit (15a; 15b; 15c) is provided for determining and providing three-dimensional map information.

5. Locating system at least according to Claim 1, **characterized in that** the evaluation unit (15a; 15b; 15c) is provided for updating an area of the map information if objects to be located (13a; 13b; 13c) which are assigned to the area of the map information are located again.

6. Locating system at least according to Claim 1, **characterized in that** the evaluation unit (15a; 15b; 15c) is provided for refining an area of the map information if objects to be located (13a; 13b; 13c) which are assigned to the area of the map information are located again.

7. Locating system according to any of the preceding claims, **characterized in that** a further data source (19a; 19b; 19c) is embodied as a further locating sensor.

8. Locating system according to any of the preceding claims, **characterized in that** a further data source (20a; 20b; 20c) is embodied as a further position sensor.

9. Locating system according to any of the preceding claims, **characterized in that** a further data source (21a; 21b; 21c) is embodied as a rotation sensor provided for capturing a rotation of the locating sensor (11a; 11b; 11c).

10. Locating system according to any of the preceding claims, **characterized in that** a further data source (22a; 22b; 22c) is embodied as an acceleration sensor provided for capturing acceleration information of the locating sensor (11a; 11b; 11c).

11. Locating system according to any of the preceding claims, **characterized in that** a further data source (23a; 23b; 23c) is embodied as an external application.

12. Locating system according to any of the preceding claims, **characterized in that** the data source (24a; 24b; 24c) is embodied as a camera which records an image of the examination surface (12a; 12b; 12c) in at least one operating state.

13. Locating system according to any of the preceding claims, **characterized in that** a further data source (26a; 26b; 25c) comprises a modelling module (35a; 35b; 35c) provided for providing model data on the basis of the locating data of the locating sensor (11a; 11b; 11c).

14. Method for locating objects to be located (13a; 13b; 13c) concealed below an examination surface (12a; 12b; 12c), in which an evaluation unit (15a; 15b; 15c) assigns locating data of a locating sensor (11a; 11b; 11c) to position data of a position sensor (14a; 14b; 14c) and determines and outputs at least two-dimensional map information and modifies the at least two-dimensional map information on the basis of data of a data source (16a, 17a, 19a-26a; 16b, 17b, 19b-26b; 16c, 17c, 19c-26c), wherein the data source (17a; 17b; 17c) has a buffer memory (18a; 18b; 18c) at least for the locating data, **characterized in that** locating data of the locating sensor (11a; 11b; 11c) which are stored in the buffer memory (18a) are evaluated and structural properties of the locating data are extracted by means of an image recognition module (34a; 34b; 34c) of the data source, wherein the structural properties are made available to the evaluation unit (15a) as geometric object data by means of the image recognition module (34a; 34b; 34c), wherein the locating data are superimposed on the geometric object data by means of the evaluation unit (15a).

## Revendications

1. Système de localisation, notamment appareil de localisation tenu en main, comprenant au moins un capteur de localisation (11a ; 11b ; 11c) guidé à la main, lequel est conçu pour acquérir des données de localisation à propos d'objets de localisation (13a ; 13b ; 13c) dissimulés sous une surface examinée (12a ; 12b ; 12c), comprenant un capteur de position (14a ; 14b ; 14c), qui est conçu pour acquérir des données de position pouvant être associées aux données de localisation, comprenant une unité d'interprétation (15a ; 15b ; 15c), qui est conçue pour déterminer et fournir une information cartographique au moins bidimensionnelle à partir des données de localisation et des données de position, comprenant au moins une source de données (25a ; 25b ; 25c), qui est conçue pour fournir des données à propos d'une modification de l'information cartographique au moins bidimensionnelle, la source de données (25a ; 25b ; 25c) possédant une mémoire temporaire (18a ; 18b ; 18c) au moins pour les données de localisation, **caractérisé en ce que** la source de données (25a ; 25b ; 25c) comporte un module de reconnaissance d'image (34a ; 34b ; 34c), qui est conçu pour interpréter des données de localisation du capteur de localisation (11a ; 11b ; 11c) qui sont stockées dans la mémoire temporaire 18a, et pour extraire des propriétés structurelles des données de localisation, le module de reconnaissance d'image (34a ; 34b ; 34c) fournissant les propriétés structurelles à l'unité d'interprétation 15a sous la forme de données d'objet géométriques, l'unité d'interprétation 15a étant conçue pour superposer les données d'objet géométriques aux données de localisation.

2. Système de localisation selon la revendication 1, **caractérisé en ce que** le capteur de localisation (11a ; 11b ; 11c) est configuré pour pouvoir être déplacé librement le long de la surface examinée (12a ; 12b ; 12c) .

3. Système de localisation selon l'une des revendications précédentes, **caractérisé en ce que** l'unité d'interprétation (15a ; 15b ; 15c) est conçue pour déterminer et fournir l'information cartographique en temps réel.

4. Système de localisation selon l'une des revendications précédentes, **caractérisé en ce que** l'unité d'interprétation (15a ; 15b ; 15c) est conçue pour déterminer et fournir une information cartographique tridimensionnelle.

5. Système de localisation selon au moins la revendication 1, **caractérisé en ce que** l'unité d'interprétation (15a ; 15b ; 15c) est conçue pour actualiser une zone de l'information cartographique lors d'une nouvelle localisation d'objets de localisation (13a ; 13b ; 13c) qui sont associés à la zone de l'information cartographique.

6. Système de localisation selon au moins la revendication 1, **caractérisé en ce que** l'unité d'interprétation (15a ; 15b ; 15c) est conçue pour affiner une zone de l'information cartographique lors d'une nouvelle localisation d'objets de localisation (13a ; 13b ; 13c) qui sont associés à la zone de l'information cartographique.

7. Système de localisation selon l'une des revendications précédentes, **caractérisé en ce qu'**une source de données supplémentaire (19a ; 19b ; 19c) est réalisée sous la forme d'un capteur de localisation supplémentaire.

8. Système de localisation selon l'une des revendications précédentes, **caractérisé en ce qu'**une source de données supplémentaire (20a ; 20b ; 20c) est réalisée sous la forme d'un capteur de position supplémentaire.

9. Système de localisation selon l'une des revendications précédentes, **caractérisé en ce qu'**une source de données supplémentaire (21a ; 21b ; 21c) est réalisée sous la forme d'un capteur de rotation, lequel est conçu pour détecter une rotation du capteur de localisation (11a ; 11b ; 11c).

10. Système de localisation selon l'une des revendications précédentes, **caractérisé en ce qu'**une source de données supplémentaire (22a ; 22b ; 22c) est réalisée sous la forme d'un capteur d'accélération, lequel est conçu pour acquérir une information d'accélération du capteur de localisation (11a ; 11b ; 11c) .

11. Système de localisation selon l'une des revendications précédentes, **caractérisé en ce qu'**une source de données supplémentaire (23a ; 23b ; 23c) est réalisée sous la forme d'une application externe.

12. Système de localisation selon l'une des revendications précédentes, **caractérisé en ce que** la source de données (24a ; 24b ; 24c) est réalisée sous la forme d'une caméra qui, dans au moins un état opérationnel, enregistre une image de la surface examinée (12a ; 12b ; 12c).

13. Système de localisation selon l'une des revendications précédentes, **caractérisé en ce qu'**une source de données supplémentaire (26a ; 26b ; 25c) comporte un module de modélisation (35a ; 35b ; 35c), qui est conçu pour fournir des données de modèle à l'aide des données de localisation du capteur de localisation (11a ; 11b ; 11c).

14. Procédé pour une localisation d'objets de localisation (13a ; 13b ; 13c) dissimulés sous une surface examinée (12a ; 12b ; 12c), avec lequel une unité d'interprétation (15a ; 15b ; 15c) associe des données de localisation d'un capteur de localisation (11a ; 11b ; 11c), à des données de position d'un capteur de position (14a ; 14b ; 14c), et détermine et délivre une information cartographique au moins bidimensionnelle, et modifie l'information cartographique au moins bidimensionnelle à l'aide de données d'une source de données (16a, 17a, 19a-26a ; 16b, 17b, 19b-26b ; 16c, 17c, 19c-26c), la source de données (17a ; 17b ; 17c) possédant une mémoire temporaire (18a ; 18b ; 18c) au moins pour les données de localisation, **caractérisé en ce que** des données de localisation du capteur de localisation (11a ; 11b ; 11c), qui sont stockées dans la mémoire temporaire 18a, sont interprétées et des propriétés structurelles des données de localisation sont extraites au moyen d'un module de reconnaissance d'image (34a ; 34b ; 34c) de la source de données, les propriétés structurelles étant fournies à l'unité d'interprétation 15a sous la forme de données d'objet géométriques au moyen du module de reconnaissance d'image (34a ; 34b ; 34c), les données d'objet géométriques étant superposées aux données de localisation au moyen de l'unité d'interprétation 15a.
